# EUROPÄISCHE PATENTSCHRIFT

(11) **EP 3 585 840 B1**
(45) Veröffentlichungstag und Bekanntmachung des Hinweises auf die Patenterteilung: **03.06.2020**
(21) Anmeldenummer: 17751072.4
(22) Anmeldetag: 04.08.2017
(51) Int. Cl.: C08L 83/04, C09D 183/04, C09J 183/04

(54) **DURCH BESTRAHLUNG MIT UV-LICHT VERNETZBARE SILICONZUSAMMENSETZUNGEN**
SILICONE COMPOSITIONS THAT CAN BE CROSS-LINKED BY IRRADIATION WITH UV LIGHT
COMPOSITIONS DE SILICONE RÉTICULABLES PAR IRRADIATION AVEC DE LA LUMIÈRE ULTRAVIOLETTE

(43) Veröffentlichungstag der Anmeldung: 01.01.2020
(73) Patentinhaber: Wacker Chemie AG, 81737 München (DE)
(72) Erfinder: HÖFL, Claus, 84503 Altötting (DE); ZEILER, Kerstin, 84533 Haiming (DE); HIERSTETTER, Thomas, 84489 Burghausen (DE); SCHUSTER, Johann, 84547 Emmerting (DE)
(74) Vertreter: Deffner-Lehner, Maria
(86) Internationale Anmeldenummer: PCT/EP2017/069787
(87) Internationale Veröffentlichungsnummer: WO 2019/025001

(56) Entgegenhaltungen:
- WO-A1-2010/009752

## Beschreibung

Additionsvernetzende Siliconkautschuke können auf verschiedene Arten zur Vulkanisation gebracht werden. Üblich ist vor allem die thermisch induzierte Vernetzung. Es wird aber auch die lichtinduzierte, insbesondere UV-Licht-induzierte, Vernetzung angewendet.

Additionsvernetzende Siliconmassen lassen sich als Einkomponenten- oder Zweikomponentensysteme formulieren. Einkomponentensysteme haben für die Anwender den großen Vorteil, dass keine Vermischung von zwei oder mehreren Komponenten vorgenommen werden muss. Um jedoch ein thermisch vernetzendes System als eine Komponente liefern zu können, ist eine sehr hohe Lagerstabilität, also lange Aushärtezeit bei Raumtemperatur ("Topfzeit") und/oder z. T. auch Versand und Lagerung unter Kühlung notwendig. Eine derartig lange Topfzeit, z. B. von mehr als 6 Monaten, lässt sich nur durch den Einsatz spezieller Platinkatalysatoren oder einer großen Menge an Vulkanisationsverzögerer, sogenannter Inhibitoren, erreichen. Inhibitoren weisen aber den Nachteil auf, dass sie die Vernetzungsgeschwindigkeit beeinträchtigen.

Der Einsatz von speziellen Platinkatalysatoren mit Phosphiten als Liganden in thermisch durch Hydrosilylierung vernetzbaren Siliconzusammensetzungen ist aus US 2009/0088524 A1 bekannt. Die Topfzeiten werden dabei gegenüber üblichen Platin-katalysatoren, wie dem Platindivinyltetramethylsiloxan-Komplex (sogenannter Karstedt-Katalysator) zwar verbessert. Die Anspringtemperaturen, bei denen die Vernetzung einsetzt, nehmen aber ebenfalls zu.

In I. Kownacki et al., Applied Catalysis A: General 362 (2009) 106-114 werden bei der thermischen Vernetzung von Siliconen via Hydrosilylierung Triorganophosphite als Inhibitoren von Platinkatalysatoren, wie dem Karstedt-Katalysator eingesetzt, mit denen eine genügend lange Topfzeit erzielt wird. Es wird aber auch darauf hingewiesen, dass der Einsatz dieser Phosphite zu einer Verlängerung der Vernetzungszeiten führen kann.

Zur Aushärtung von einkomponentigen thermisch vernetzbaren Siliconmassen oder solchen mit sehr langer Topfzeit sind daher in der Regel sehr hohe Temperaturen von mehr als 100°C notwendig, oder alternativ müssen bei Anwendung von niedrigeren Temperaturen sehr lange Durchhärtezeiten in Kauf genommen werden. Zur Vernetzung bei den üblicherweise hohen Temperaturen muss Wärme durch Temperöfen auf den Kautschuk übertragen werden. Dies ist nicht nur sehr energieaufwändig, sondern häufig auch schlicht nicht möglich. Manche Materialien, mit denen die Siliconmassen in Kontakt gebracht werden müssen, schmelzen, verändern oder zersetzen sich bei diesen Temperaturen bereits. Gerade im Bereich der Elektroindustrie, Elektronikindustrie und Medizintechnik sind aber Verbindungen von Silicon mit diesen Materialien von großer Bedeutung.

Gegenüber der thermischen Vernetzung hat die UV-induzierte Vernetzung den Vorteil, dass als Energiequelle lediglich UV-Licht notwendig ist und die Durchhärtung nach Bestrahlung sehr schnell erfolgen kann. Die Eignung von Cyclopentadienyl-Komplexen des Platins zur UV-aktivierten Hydrosilylierung ist beispielsweise aus US 4,600,484, US 8,088,878 B2 und WO 2016/030325 A1 bekannt. Aber auch bei UV-vernetzenden Siliconkautschukmassen kann es zu Instabilitäten kommen, die die Lagerfähigkeit beeinträchtigen. Die Gelierzeit von zweikomponentigen Massen wird während der Lagerung, auch beim Lagern im Dunkeln, häufig immer kürzer, sie beginnen also mit Verlauf der Lagerung immer schneller zu gelieren, während einkomponentige Massen zu vulkanisieren beginnen.

In WO 2010/009752 A1 sind thermisch vernetzende Siliconzusammensetzungen, die Phosphite mit aliphatischen polycyclischen Resten enthalten, beschrieben.

Es bestand daher die Aufgabe die oben genannten Nachteile zu vermeiden und Siliconzusammensetzungen bereitzustellen, die eine gute Lagerfähigkeit, auch als Einkomponentensysteme, aufweisen, bei Bestrahlung eine schnelle Härtung ermöglichen, wobei die Vernetzungsgeschwindigkeit im Wesentlichen unbeeinträchtigt bleibt und die Härtung bei Raumtemperatur erfolgt, also energiearm unter Vermeidung von hohen Temperaturen möglich ist. Die Aufgabe wird durch die Erfindung gelöst.

Gegenstand der Erfindung sind durch Bestrahlung mit Licht, vorzugsweise UV-Licht, vernetzbare Siliconzusammensetzungen enthaltend
(A) Organosiliciumverbindungen, die Si-C-gebundene Reste mit aliphatischen Kohlenstoff-Kohlenstoff-Mehrfachbindungen aufweisen,
(B) Organosiliciumverbindungen mit Si-gebundenen Wasserstoffatomen
   oder anstelle von (A) und (B)
(C) Organosiliciumverbindungen, die Si-C-gebundene Reste mit aliphatischen Kohlenstoff-Kohlenstoff-Mehrfachbindungen und Si-gebundene Wasserstoffatome aufweisen,
(D) durch Licht der Wellenlänge von 200 bis 500 nm, vorzugsweise UV-Licht der Wellenlänge 200 bis 400 nm, aktivierbare Platinkatalysatoren ausgewählt aus der Gruppe der Cyclopentadienyl-Komplexe des Platins und
(E) phosphororganische Verbindungen ausgewählt aus der Gruppe der Formeln

   P(=O)ᵤ[(OR¹⁰)]ₛ[R¹¹]ₜ (I),

   P[(O)ᵢSiR¹²₃]₃ (II),

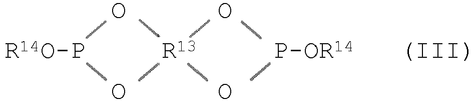

   und deren Mischungen,
   wobei R¹⁰ und R¹¹ gleich oder verschieden sind und jeweils einen Alkylrest der Formel CⱼH₂ⱼ₊₁ mit j=2-31 oder einen Alkenylrest der Formel CₖH₂ₖ₋₁ mit k=2-31 oder einen Aryl- oder Alkylarylrest der Formel - (C₆H_{5-w}) - (CᵥH₂ᵥ₊₁)_{w} mit v = 1-18 und w = 0-5 bedeuten,
   R¹² gleich oder verschieden ist und einen einwertigen Kohlenwasserstoffrest mit 1 bis 18 C-Atomen bedeutet,
   R¹³ ein vierwertiger Kohlenwasserstoffrest mit 5 bis 30 C-Atomen bedeutet,
   R¹⁴ gleich oder verschieden ist und die Bedeutung von R¹⁰ hat,
   s 0, 1, 2 oder 3 ist,
   t 0, 1, 2 oder 3 ist,
   mit der Maßgabe, dass die Summe s+t gleich 3 ist,
   u 0 oder 1, bevorzugt 0, ist und
   i 0 oder 1, bevorzugt 1, ist.

Beispiele für Reste R¹⁰ sind der Ethyl-, Propyl-, Phenyl-, Nonylphenyl-, Dinonylphenyl-, 2-Ethylhexyl-, 2,4-Di-tert-butylphenylrest und 2-tert-Butyl-4-methylphenylrest.

Beispiele für Reste R¹¹ sind der Phenylrest.

Kohlenwasserstoffreste R¹² in Formel (II) sind vorzugsweise Alkyl-, Alkenyl-, Aryl- oder Alkarylreste.
Beispiele für Reste R¹² sind der Methyl-, Ethyl-, n-Propyl-, Isopropyl-, n-Butyl-, tert-Butyl- und Hexylrest, bevorzugt sind der Methyl- und tert-Butylrest.

Ein bevorzugtes Beispiel für R¹³ in Formel (III) ist folgender Rest der Formel C(CH₂-)₄:

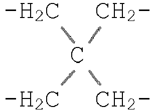

Beispiele für Reste R¹⁴ in Formel (III) sind der Octadecyl-, 2,4-Di-tert-butylphenyl- und 2,6-Di-tert-butyl-4-methylphenylrest.

Phosphororganische Verbindungen der Formel (I) sind vorzugsweise solche der Formel mit u = 0 sowie s = 3 und t = 0 wie

P[(OR¹⁰)]₃ (Ia)

oder solche der Formel mit u = 0 und t = 3 und s = 0 wie

P[R¹¹]₃ (Ib).

Beispiele für phosphororganische Verbindungen der Formeln (Ia) und (Ib) sind
- Triethylphosphit
- Triphenylphosphit
- Tris(2,4-di-tert-butylphenyl)phosphit
- Tris(2-tert-butyl-4-methylphenyl)phosphit
- Tris(1-adamantanemethyl)phosphit
- Triisopropylphosphit
- Triisodecylphosphit
- Tris(2-ethylhexyl)phosphit
- Tris(nonylphenyl)phosphit
- Tris[(2-phenyl)phenyl]phosphit
- Tris[(3-phenyl)phenyl]phosphit
- Tris[(4-phenyl)phenyl]phosphit
- Tris[(5-phenyl)phenyl]phosphit
- Tris[(6-phenyl)phenyl]phosphit
- Tris[(2,4-diphenyl)phenyl]phosphit
- Tris[(2,6-diphenyl)phenyl]phosphit
- Tris[(3,5-diphenyl)phenyl]phosphit
- Tris(2,6-diisopropylphenyl)phosphit
- Tris(2-methylphenyl)phosphit
- Tris(2,4-dioctylphenyl)phosphit
- Tri(o-tolyl)phosphit
- Tricyclohexylphosphit
- Trilaurylphosphit
- Diisodecylphenylphosphit
- 2-Ethylhexyldiphenylphosphit
- Benzyldiphenylphosphin
- tert-Butyldiphenylphosphin
- Cyclohexyldiphenylphosphin
- Tri-n-butylphosphin
- Tri-tertbutyl-phosphin
- Tri-o-tolyl-phosphin
- Tri(p-tolyl)phosphin
- Tricylohexylphosphin
- Dimethylphenylphosphin

Phosphororganische Verbindungen der Formel (I) mit u = 0 können auch solche sein, bei denen s 1, 2 oder 3 und t 1, 2 oder 3 ist, mit der Maßgabe, dass die Summe s+t = 3 ist.

Beispiele für phosphororganische Verbindungen der Formel (II) mit i = 1 bzw. i = 0 sind
- Tris(tert-butyldimethylsilyl)phosphit
- Tris(trimethylsilyl)phosphit bzw.
- Tris(trimethylsilyl)phosphine.

Ein Beispiel für die phosphororganische Verbindung der Formel (III) ist 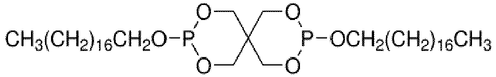 [3,9-Bis(octa-decyloxy)-2,4,8,10-tetraoxa-3,9-diphosphaspiro[5.5]undecan].

Weitere Beispiele sind
- (3,9-Bis(2,4-ditert-butylphenoxy)-2,4,8,10-tetraoxa-3,9-diphosphaspiro[5.5]undecane)
- Distearylpentaerythritdiphosphit
- Bis(2,6-di-tertbutyl-4-methylphenyl)-pentaerythritdiphosphit

Die Herstellung der erfindungsgemäßen phosphororganischen Verbindungen ist bekannt, beispielsweise in I. Kownacki et al., Applied Catalysis A: General 362 (2009) 106-114;
US 4,692,540 A; Y. Li et al., J. Am. Chem. Soc. 134 (2012) 18325-18329; GB 944 062 A; US 6,653,494 B2; EP 2 239 248 A2; A.H. Ford-Moore et al., Org. Synth 31 (1951) 111; M. Sekine et al., Bull. Chem. Soc. Jpn. 55 (1982) 239-242 beschrieben und sind im Handel erhältlich, beispielsweise bei Sigma Aldrich Chemie GmbH, Eschenstr. 5, 82024 Taufkirchen.

Die erfindungsgemäßen phosphororganischen Verbindungen (E) werden in den vernetzbare Siliconzusammensetzungen in Mengen von vorzugsweise 0,001 bis 10 000 Gew.-ppm, bevorzugt 1 bis 1 000 Gew.-ppm, jeweils bezogen auf das Gesamtgewicht der Siliconzusammensetzungen, eingesetzt.

In den erfindungsgemäßen vernetzbaren Siliconzusammensetzungen werden vorzugsweise als Organosiliciumverbindungen (A), die Si-C-gebundene Reste mit aliphatischen Kohlenstoff-Kohlenstoff-Mehrfachbindungen aufweisen, lineare oder verzweigte oder harzartige Organopolysiloxane aus Einheiten der Formel

RₐR¹_{b}SiO_{(4-a-b)/2} (IV),

eingesetzt, wobei
R gleich oder verschieden ist und einen einwertigen, gegebenenfalls substituierten, von aliphatischen Kohlenstoff-Kohlenstoff-Mehrfachbindungen freien Si-C-gebundenen Kohlenwasserstoffrest mit 1 bis 18 Kohlenstoffatomen je Rest bedeutet und
R¹ gleich oder verschieden ist und einen einwertigen Si-C-gebundenen Kohlenwasserstoffrest mit terminaler, aliphatischer Kohlenstoff-Kohlenstoff-Mehrfachbindung mit 2 bis 10 Kohlenstoffatomen je Rest bedeutet,
a 0, 1, 2 oder 3 ist,
b 0, 1 oder 2 ist
und die Summe a+b≤3 ist,
mit der Maßgabe, dass die Organopolysiloxane mindestens 2 Reste R¹ enthalten.

Beispiele für unsubstituierte Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der beta-Phenylethylrest.

Beispiele für substituierte Kohlenwasserstoffreste als Reste R sind halogenierte Kohlenwasserstoffe, wie der Chlormethyl-, 3-Chlorpropyl-, 3-Brompropyl, 3,3,3-Trifluorpropyl und 5,5,5,4,4,3,3-Hexafluorpentylrest sowie der Chlorphenyl-, Dichlorphenyl- und Trifluortolylrest.

R weist vorzugsweise 1 bis 6 Kohlenstoffatome auf. Bevorzugte Beispiele für Reste R sind der Methyl- und Phenylrest.

Beispiele für Reste R¹ sind der Vinyl-, Allyl-, Methallyl-, 1-Propenyl-, 5-Hexenyl-, Ethinyl-, Butadienyl-, Hexadienyl-, Cyclopentenyl-, Cyclopentadienyl- und Cyclohexenylrest, wobei der Vinyl- und Allylrest bevorzugt ist.

Bestandteil (A) kann auch eine Mischung verschiedener Alkenylgruppen enthaltender Organopolysiloxane sein, die sich beispielsweise im Alkenylgruppengehalt, der Art der Alkenylgruppe oder strukturell unterscheiden.

Die Struktur der Alkenylgruppen enthaltenden Organopolysiloxane (A) kann linear, cyclisch oder auch verzweigt oder harzartig sein. Der Gehalt an zu verzweigten Organopolysiloxanen führenden tri- und/oder tetrafunktionellen Einheiten, ist typischerweise sehr gering, vorzugsweise höchstens 20 Mol-%, insbesondere höchstens 0,1 Mol-%.

Bevorzugt als Organosiliciumverbindungen (A) sind Organopolysiloxane der Formel

R¹_{d}R_{3-d}SiO(SiR₂O)ₙ(SiRR¹O)ₘSiR_{3-d}R¹_{d} (V)

wobei R und R¹ die oben dafür angegebene Bedeutung haben,
d 0, 1, 2 oder 3, bevorzugt 1, bedeutet,
m 0 oder eine ganze Zahl von 1 bis 200 ist und
n 0 oder eine ganze Zahl von 1 bis 1800 ist,
mit der Maßgabe, dass die Organopolysiloxane der Formel (V) mindestens zwei Reste R¹ enthalten.

Im Rahmen dieser Erfindung soll Formel (V) so verstanden werden, dass n Einheiten -(SiR₂O)- und m Einheiten - (SiRR¹O) - in beliebiger Weise im Organopolysiloxanmolekül verteilt sein können.

Die Organopolysiloxane (A) besitzen eine Viskosität bei 25 °C von vorzugsweise 50 bis 1 000 000 mPa·s, bevorzugt 500 bis 20 000 mPa·s. Die Viskosität wird nach DIN 53029 bestimmt.

Als Organosiliciumverbindungen (B), die Si-gebundene Wasserstoffatome aufweisen, werden vorzugsweise lineare, cyclische oder verzweigte Organopolysiloxane aus Einheiten der Formel

RₑH_{f}SiO_{(4-e-f)/2} (VI),

eingesetzt, wobei
R die oben dafür angegebene Bedeutung hat,
e 0, 1, 2 oder 3,
f 0, 1 oder 2
und die Summe von e+f≤3 ist,
mit der Maßgabe, dass die Organopolysiloxane mindestens 2 Si-gebundene Wasserstoffatome enthalten.

Bevorzugt ist die Verwendung einer drei oder mehr SiH-Bindungen pro Molekül enthaltenden Organosiliciumverbindung (B). Bei ausschließlicher Verwendung einer Organosiliciumverbindung (B), die nur zwei SiH-Bindungen pro Molekül aufweist, empfiehlt sich die Verwendung eines Organopolysiloxans (A), das über mindestens drei Alkenylgruppen pro Molekül verfügt.

Der Wasserstoffgehalt der Organosiliciumverbindung (B), welcher sich ausschließlich auf die direkt an Siliciumatome gebundenen Wasserstoffatome bezieht, liegt vorzugsweise im Bereich von 0,002 bis 1,7 Gew.-% Si-gebundenem Wasserstoff, bevorzugt von 0,008 bis 1,7 Gew.-% Si-gebundenem Wasserstoff.

Bevorzugt werden als Organosiliciumverbindungen (B) Organopolysiloxane der Formel

HₓR₃₋ₓSiO(SiR₂O)_{y}(SiRHO)_{z}SiR₃₋ₓHₓ (VII)

eingesetzt, wobei
R die oben dafür angegebene Bedeutung hat,
x 0, 1 oder 2,
y 0 oder eine ganze Zahl von 1 bis 1500 und
z 0 oder eine ganze Zahl von 1 bis 200 ist,
mit der Maßgabe, dass die Organopolysiloxane der Formel (VII) mindestens 2 Si-gebundene Wasserstoffatome enthalten.

Im Rahmen dieser Erfindung soll Formel (VII) so verstanden werden, dass y Einheiten -(SiR₂O)- und z Einheiten -(SiRHO)- in beliebiger Weise im Organopolysiloxanmolekül verteilt sein können.

Die erfindungsgemäß eingesetzten Organosiliciumverbindungen (B) haben bei 25 °C eine Viskosität von vorzugsweise 10 bis 20000 mPa·s, bevorzugt 20 bis 1200 mPa.s.
Die Viskosität wird nach DIN 53029 bestimmt

Die Organosiliciumverbindung (B) wird vorzugsweise in Mengen von 0,3 bis 5,0 Mol, bevorzugt 0,45 bis 3,0 Mol, Si-gebundener Wasserstoff je Mol Si-gebundenen Restes mit aliphatischer Kohlenstoff-Kohlenstoff-Mehrfachbindung in der Organosiliciumverbindung (A) eingesetzt.

Anstelle von Organosiliciumverbindungen (A) und (B) können auch Organosiliciumverbindungen (C) eingesetzt werden. Als Organosiliciumverbindungen (C), die Si-C-gebundene Reste mit aliphatischen Kohlenstoff-Kohlenstoff-Mehrfachbindungen und

Si-gebundene Wasserstoffatome aufweisen, und anstelle von Organosiliciumverbindungen (A) und (B) verwendet werden können, werden vorzugsweise solche aus Einheiten der Formel

RₕSiO_{(4-h)/2} (VIII), R₁R¹SiO_{(3-1)/2} (IX) und RᵣHSiO_{(3-r)/2} (X),

eingesetzt, wobei
R und R¹ die oben dafür angegebene Bedeutung haben,
h 0, 1, 2 oder 3,
1 0, 1 oder 2, und
r 0, 1 oder 2 ist,
mit der Maßgabe, dass die Organopolysiloxane mindestens zwei Reste R¹ und mindestens zwei Si-gebundene Wasserstoffatome enthalten.

Beispiele für Organopolysiloxane (C) sind solche aus SiO_{4/2}-, R₃SiO_{1/2}-, R₂R¹SiO_{1/2}- und R₂HSiO_{1/2}- Einheiten, sogenannte MQ-Harze, wobei diese Harze zusätzlich RSiO_{3/2}- und R₂SiO_{2/2}-Einheiten enthalten können, sowie lineare Organopolysiloxane im Wesentlichen bestehend aus R₂R¹SiO_{1/2}-, R₂SiO_{2/2}- und RHSiO_{2/2}-Einheiten mit Rund R¹ gleich der obengenannten Bedeutung.

Die erfindungsgemäß eingesetzten Komponenten (A), (B) und (C) sind handelsübliche Produkte bzw. nach in der Chemie gängigen Verfahren herstellbar.

Als Platinkatalysatoren (D) werden vorzugsweise Cyclopentadienyl-Komplexe des Platins der Formel (XI) 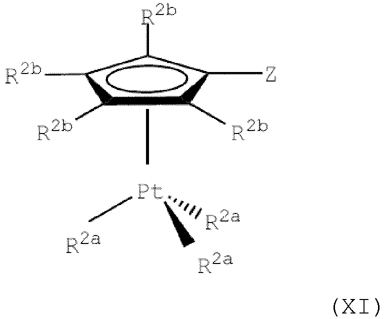 eingesetzt, wobei
**Z** ein Wasserstoffatom oder ein linearer oder verzweigter aliphatischer Kohlenwasserstoffrest, bevorzugt ein Methyl- oder Allylrest, oder ein Rest der Formel

   - (CR'₂)_{g}-SiR⁴ₒR⁵ₚR⁹_{q}

   ist, wobei
**g** eine ganze Zahl von 1 bis 8,
**o** 0, 1 oder 2,
**p** 0, 1, 2 oder 3 ist und
**q** 0, 1, 2 oder 3 ist
mit der Maßgabe, dass die Summe (o+p+q)≤93 ist,
**R'** gleich oder verschieden ist und ein Wasserstoffatom oder einen monovalenten, unsubstituierten oder substituierten Kohlenwasserstoffrest, bevorzugt ein Wasserstoffatom, bedeutet,
**R^{2a}** gleich oder verschieden ist und einen Alkyl-, Aryl-, Arylalkyl- oder Alkylarylrest, die durch Heteroatome, wie O-, N-, S oder P, unterbrochen sein können, bedeutet, wobei die Wasserstoffe durch Halogenatome oder Reste der Formel **-SiR²₃** substituiert sein können, wobei
**R²** gleich oder verschieden ist und einen monovalenten, unsubstituierten oder substituierten, linearen, cyclischen oder verzweigten Kohlenwasserstoffrest bedeutet,
**R^{2b}** gleich oder verschieden ist und ein Wasserstoffatom oder einen monovalenten, unsubstituierten oder substituierten, linearen oder verzweigten, aliphatisch gesättigten oder ungesättigten oder aromatisch ungesättigten Kohlenwasserstoffrest bedeutet, in dem einzelne Kohlenstoffatome durch O-, N-, S- oder P-Atome ersetzt sein können und die mit dem Cyclopentadienylrest annelierte Ringe bilden können, oder einer oder mehrere Reste **R^{2b}** einen Rest der Formel **-SiR³**₃ bedeuten kann, wobei
**R³** gleich oder verschieden ist und einen monovalenten, unsubstituierten oder substituierten, aliphatisch gesättigten Kohlenwasserstoffrest, der durch Heteroatome unterbrochen sein kann, oder einen aliphatisch ungesättigten, gegebenenfalls substituierten Kohlenwasserstoffrest oder einen über Sauerstoff angebundenen Siloxyrest bedeutet,
**R⁴** gleich oder verschieden ist und ein Wasserstoffatom oder einen monovalenten, unsubstituierten oder substituierten, linearen oder verzweigten, aliphatisch gesättigten oder ungesättigten oder aromatisch ungesättigten Kohlenwasserstoffrest, in dem einzelne Kohlenstoffatome durch O-, N-, S- oder P-Atome ersetzt sein können, bedeutet,
**R⁵** gleich oder verschieden ist und eine hydrolysierbare funktionelle Gruppe, ausgewählt aus der Gruppe von
   Carboxy -O-C(O)R⁶,
   Oxim -O-N=CR⁶₂,
   Alkoxy -OR⁶,
   Alkenyloxy -O-R⁸
   Amid -NR⁶-C(O)R⁷,
   Amin -NR⁶R⁷,
   Aminoxy -O-NR⁶R⁷,
   bedeutet, wobei
**R⁶** gleich oder verschieden ist und ein H-Atom oder einen Alkyl-, Aryl-, Arylalkyl- oder Alkylarylrest bedeutet,
**R⁷** gleich oder verschieden ist und einen Alkyl-, Aryl-, Arylalkyl- oder Alkylarylrest bedeutet,
**R⁸** einen linearen oder verzweigten, aliphatisch ungesättigten organischen Rest, vorzugsweise Kohlenwasserstoffrest, bedeutet,
**R⁹** gleich oder verschieden ist und einen monovalenten linearen, cyclischen oder verzweigten, oligomeren oder polymeren siliciumorganischen Rest bedeutet, der eine oder mehrere Gruppen ausgewählt aus
   a) aliphatisch gesättigte oder ungesättigte Gruppen mit 1 bis 30 C-Atomen, in denen einzelne Kohlenstoffatome durch Hal, O-, N-, S- oder P-Atome ersetzt sein können,
   b) aromatische Gruppen mit 1 bis 30 C-Atomen, in denen einzelne Kohlenstoffatome durch Hal, O-, N-, S- oder P-Atome ersetzt sein können,
   c) Si-gebundene Wasserstoffatome
   d) Hydroxylgruppen und
   e) hydrolysierbare Gruppen
      enthalten kann.

Beispiele für R⁴ sind Alkylreste, wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Alkenylreste, wie der Vinyl-, 1-Propenyl-, 2-Propenyl, n-5-Hexenyl-, 4-Vinylcyclohexyl- und der 3-Norbornenylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Aralkylreste, wie der Benzylrest, der α- und der β-Phenylethylrest.

Beispiele für substituierte Reste R⁴ sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R⁴ um einwertige Kohlenwasserstoffreste mit 1 bis 30 Kohlenstoffatomen, die durch Heteroatome, wie O-, N-, S oder P, unterbrochen sein können, besonders bevorzugt um einwertige, aliphatische gesättigte Kohlenwasserstoffreste mit 1 oder 8 Kohlenstoffatomen, insbesondere um den Methyl- oder Phenylrest, ganz besonders bevorzugt um den Methylrest.

Bevorzugte Reste R⁵ sind Carboxyrest und Alkoxyreste, wobei Methoxy- und Ethoxyreste besonders bevorzugt sind.

Bevorzugt handelt es sich beim Rest R⁹ um über Sauerstoff angebundene Siloxyreste.

Beispiele für Siloxyreste R⁹ sind lineare oder verzweigte Oligo- und Polysiloxyreste mit 1 bis 5000 Siloxyeinheiten, die Dimethylsiloxy-, Phenylmethylsiloxy-, Diphenylsiloxy-, Methylsiloxy-, Phenylsiloxy oder SiO_{4/2}-Einheiten enthalten und Hydroxy-, Trimethylsilyl-, Dimethylsilyl- oder Vinylendgruppen tragen.

Bevorzugt handelt es sich bei den Siloxyresten R⁹ um solche der Formel

- (OSiR^{9a}₂)ₘ-R^{9a} (XII),

wobei m gleich einer ganzen Zahl von 1 bis 5000, bevorzugt 8 bis 1000, ist und R^{9a} gleich oder verschieden sein kann und eine für Rest R⁴ angegebene Bedeutung hat.

Bevorzugte Beispiele für Siloxyreste R⁹ sind solche der Formel

- (OSiR^{9b}₂)ₘ-R^{9c} (XIIa),

wobei m die oben dafür angegebene Bedeutung hat,
R^{9b} ein Methyl- oder Phenylrest ist und
R^{9c} ein Methyl-, Vinyl- oder Hydroxyrest oder ein Si-gebundenes H-Atom ist.

Beispiele für Rest R' sind das Wasserstoffatom und die für unsubstituierte Rest R⁴ angegebenen Beispiele.

Bevorzugte Reste R^{2a} sind gegebenenfalls mit Halogenatom, Silylrest oder Arylrest substituierte aliphatische Kohlenwasserstoffreste mit 1 bis 30 C-Atomen, die durch Heteroatome, wie O, N, S oder P, unterbrochen sein können, besonders bevorzugt lineare und verzweigte Alkylreste mit 1 bis 12 Kohlenstoffatomen, insbesondere der Methylrest.

Vorzugsweise ist der Rest R^{2b} ein gegebenenfalls substituierter Kohlenwasserstoffrest, der durch Heteroatome unterbrochen sein kann, und der ein- oder mehrwertig, bevorzugt einwertig, ist. Zwei oder mehrere einwertige Reste R^{2b} können auch einen oder mehrere Ringe bilden, die mit dem Cyclopentadienylrest anelliert sind und aromatisch, gesättigt oder aliphatisch ungesättigt sein können. Es kann auch ein mehrwertiger Rest R⁴ über mehr als eine Stelle an den Cyclopentadienylrest gebunden sein und einen oder mehrere Ringe bilden, die mit dem Cyclopentadienylrest anelliert sind und aromatisch, gesättigt oder aliphatisch ungesättigt sein können.

Beispiele für Rest R^{2b} sind die für Reste R⁴ angegebenen Beispiele für einwertige, gegebenenfalls substituierte Kohlenwasserstoffreste und SiC-gebundene Silylreste -SiR³₃, wie beispielsweise Trialkylsilylreste. Beispiele für durch verbundene einwertige bzw. zweiwertige Reste R^{2b} gebildete anellierte Ringe sind Benzo-, Naphtho-, Cyclopenta- oder Cyclohexagruppen.

Bevorzugt handelt es sich beim Rest R^{2b} um ein Wasserstoffatom oder gegebenenfalls mit Halogenatomen substituierte, einwertige Kohlenwasserstoffreste mit 1 bis 30 Kohlenstoffatomen, die durch Heteroatome, wie O-, N-, S oder P, unterbrochen sein können, oder um Benzoreste oder Trialkylsilylreste, besonders bevorzugt um ein Wasserstoffatom oder einwertige, aliphatisch gesättigte Kohlenwasserstoffreste mit 1 oder 8 Kohlenstoffatomen oder Benzoreste, insbesondere um ein Wasserstoffatom oder den Methylrest.

Der Rest R^{2b} kann auch ein Rest der Formel -SiR³₃ sein. Bevorzugt handelt es sich beim Rest R³ um gegebenenfalls mit Halogenatomen substituierte, einwertige, aliphatisch gesättigte Kohlenwasserstoffreste mit 1 bis 30 Kohlenstoffatomen, die durch Heteroatome, wie O-, N-, S oder P, unterbrochen sein können, besonders bevorzugt um einwertige, aliphatische gesättigte Kohlenwasserstoffreste mit 1 oder 8 Kohlenstoffatomen, insbesondere um den Methyl- oder Phenylrest, ganz besonders bevorzugt um den Methylrest.

Beispiele für aliphatisch ungesättigte Kohlenwasserstoffreste R³ sind die für Rest R⁴ angegebenen Beispiele für gegebenenfalls substituierte, aliphatisch ungesättigte Kohlenwasserstoffreste.

Bevorzugte Beispiele für aliphatisch ungesättigte Kohlenwasserstoffreste R³ sind Reste der Formel -CR"₂-CR"=CR"₂, wobei **R"** gleich oder verschieden sein kann und eine für Rest R' angegebene Bedeutung hat.

Bevorzugt handelt es sich beim Rest R" um Wasserstoffatom oder Kohlenwasserstoffreste mit 1 bis 30 Kohlenstoffatomen, besonders bevorzugt um Wasserstoffatom oder lineare gesättigte Kohlenwasserstoffreste mit 1 bis 8 Kohlenstoffatomen, insbesondere um Methylrest oder Wasserstoffatom, ganz besonders bevorzugt um Wasserstoffatom.

Der Rest R³ kann auch ein über Sauerstoff angebundener Siloxyrest sein. Beispiele für Siloxyreste R⁹, auch die der Formeln (XII) und (XIIa), gelten auch für Siloxyreste R³.

Wenn R^{2b} ein Rest der Formel -SiR³₃ ist, dann sind bevorzugte Beispiele der Trimethylsilylrest, der Dimethylallylrest und Siloxyreste der Formel (XIIa).

Besonders bevorzugt als Platinkatalysator (D) ist der Methylcyclopentadienyltrimethylplatin-Komplex (MeCp(PtMe₃)).

Die Platinkatalysatoren (D) und deren Herstellung sind beispielsweise in US 8,088,878 B2 und WO 2016/030325 A1 beschrieben.

Der Platinkatalysator (D) kann in jeder beliebigen Form eingesetzt werden, beispielsweise auch in Form von Hydrosilylierungskatalysator enthaltenden Mikrokapseln, oder Organopolysiloxanpartikeln, wie in US 6,251,969 B1 beschrieben.

Der Gehalt an Platinkatalysator (D) wird vorzugsweise so gewählt, dass die erfindungsgemäße Siliconzusammensetzung einen Gehalt an Platinmetall von 0,1 bis 200 Gew.-ppm, bevorzugt von 0,5 bis 80 Gew.-ppm, besitzt.

Neben den oben genannten Komponenten (A), (B), (C), (D) und (E) können in den erfindungsgemäßen Siliconzusammensetzungen noch weitere Stoffe, wie Füllstoffe (F) und Zusatzstoffe (G), enthalten sein.

Die Siliconzusammensetzungen sind bevorzugt unterhalb von 500 nm, besonders bevorzugt von 200 bis 400 nm, transparent so dass eine lichtinduzierte Vernetzung der Siliconzusammensetzung durch Aktivierung des Platinkatalysators (D) erfolgen kann. Die Siliconzusammensetzungen sind daher bevorzugt frei von Licht absorbierenden Füllstoffen.

Die Siliconzusammensetzung kann jedoch auch Füllstoff (F) enthalten. Beispiele für nicht verstärkende Füllstoffe (F) sind Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver. Verstärkende Füllstoffe, also Füllstoffe mit einer BET-Oberfläche von mindestens 50 m²/g, sind beispielsweise pyrogen hergestellte Kieselsäure, gefällte Kieselsäure, Ruß, wie Furnace- und Acetylenruß und Silicium-Aluminium-Mischoxide großer BET-Oberfläche. Faserförmige Füllstoffe sind beispielsweise Asbest sowie Kunststoffasern. Die genannten Füllstoffe können hydrophobiert sein, beispielsweise durch die Behandlung mit Organosilanen bzw. -siloxanen oder durch Verätherung von Hydroxylgruppen zu Alkoxygruppen. Es kann eine Art von Füllstoff, es kann auch ein Gemisch von mindestens zwei Füllstoffen eingesetzt werden.

Wenn die erfindungsgemäßen Siliconzusammensetzungen Füllstoffe (F) enthalten, beträgt deren Anteil vorzugsweise 2 bis 60 Gew.-%, insbesondere 5 bis 50 Gew.-%, jeweils bezogen auf das Gesamtgewicht der erfindungsgemäßen Siliconzusammensetzung.

Beispiele für gegebenenfalls eingesetzte Komponenten (G) sind alle weiteren Zusatzstoffe, die auch bisher zur Herstellung von additionsvernetzbaren Zusammensetzungen eingesetzt wurden, wie harzartige Polyorganosiloxane, die von den Siloxanen (A), (B) und (C) verschieden sind, Weichmacher, Fungizide, Duftstoffe, Rheologieadditive, Korrosionsinhibitoren, Oxidationsinhibitoren, organische flammabweisend machende Mittel und Mittel zur Beeinflussung der elektrischen Eigenschaften, die von den Füllstoffen (F) verschieden sind, Dispergierhilfsmittel, Lösungsmittel, Haftvermittler, Farbadditive, Vernetzungshilfsstoffe, Weichmacher, die von den Siloxanen (A), (B) und (C) verschieden sind, und Hitzestabilisatoren.

Bei den Zusatzstoffen (G) handelt es sich bevorzugt um Farbadditive, Rheologieadditive, Haftvermittler, Vernetzungshilfsstoffe und deren Mischungen.

Falls die erfindungsgemäßen Siliconzusammensetzungen Zusatzstoffe (G) enthalten, handelt es sich um Mengen von vorzugsweise 0 bis 40 Gew.-%, besonders bevorzugt 1 bis 20 Gew.-%, insbesondere 1 bis 5 Gew.-%, jeweils bezogen auf das Gesamtgewicht der erfindungsgemäßen Siliconzusammensetzungen.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die Herstellung der erfindungsgemäßen Massen kann nach beliebiger und an sich bekannter Art und Weise erfolgen, wie etwa nach Methoden und Mischverfahren, wie sie zur Herstellung von additionsvernetzenden Zusammensetzungen üblich sind.

Ein weiterer Gegenstand der vorliegenden Erfindung ist ein Verfahren zur Herstellung der erfindungsgemäßen Massen durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen.

Das erfindungsgemäße Vermischen erfolgt bevorzugt unter Ausschluss von Feuchtigkeit und Licht mit einer Wellenlänge von kleiner 400 nm.

Das erfindungsgemäße Verfahren kann kontinuierlich oder diskontinuierlich durchgeführt werden.

In einer bevorzugten Ausführungsform des erfindungsgemäßen Verfahrens werden eine Mischung aus Platinkatalysator (D) und Komponente (E) mit den Komponenten (A), (B) und ggf. (F) und ggf. (G) gleichmäßig vermischt. Der erfindungsgemäß eingesetzte Platinkatalysator (D) kann dabei als Substanz oder als Lösung in einem geeigneten Lösungsmittel, vorzugsweise gelöst in einer geringen Menge (A), und vermischt mit (E) eingesetzt werden.

Bei den erfindungsgemäßen Zusammensetzungen kann es sich sowohl um Einkomponenten-Siliconzusammensetzungen als auch Zweikomponenten-Siliconzusammensetzungen handeln. In letzterem Fall können die beiden Komponenten der erfindungsgemäßen Zusammensetzungen alle Bestandteile in beliebigen Mengenverhältnissen enthalten. Bevorzugt enthält eine Komponente den Platinkatalysator (D) und keine Si-H-haltige Komponente (B) oder (C).

Vorzugsweise wird die Vernetzung bei Raumtemperatur, vorzugsweise bei 15°C bis 30°C, und dem Druck der umgebenden Atmosphäre, also etwa 900 bis 1100 hPa, durchgeführt.

Vorzugsweise wird die Vernetzung durch Bestrahlung, besonders durch ultraviolette Strahlung (UV) bei 200 bis 400 nm, insbesondere 250 bis 350 nm, initiiert. Abhängig von der Formulierung, dem Katalysator und der Intensität der UV-Strahlung kann die nötige Bestrahlungszeit bevorzugt weniger als 5 Minuten, besonders bevorzugt 10 Sekunden und weniger, betragen. Jede Strahlungsquelle, die Strahlungsanteile unter ungefähr 400 nm hat, kann benutzt werden. Wellenlängen kleiner 200 nm sind bevorzugt nicht zu verwenden. Konventionelle Nieder-, Mittel- und Hochdruckquecksilberlampen sind geeignet. Strahlungsquellen, wie Leuchtstoffröhren und "Schwarzlichtlampen" sind ebenfalls geeignet.

Die erfindungsgemäßen Siliconzusammensetzungen haben den Vorteil, dass sie überraschenderweise durch den Zusatz der erfindungsgemäßen Phosphorverbindungen gut lagerfähig unter Ausschluss von Licht sind, wobei sich die Viskositäten über eine lange Lagerzeit nicht verändern, die Gelierzeiten konstant bleiben und die vernetzbaren Massen also keine Tendenz zu vulkanisieren zeigen. Dies hat den weiteren Vorteil, dass sie dadurch auch als Einkomponentensysteme eingesetzt werden können. Unerwarteterweise setzt die Vernetzung bei Bestrahlung unmittelbar und schnell ein und die Vernetzungsgeschwindigkeit wird nicht beeinträchtigt bzw. bleibt nahezu unbeeinträchtigt und dies trotz des Einsatzes der erfindungsgemäßen Phosphorverbindungen, die als Inhibitoren bekannt sind. Die erfindungsgemäßen Phosphorverbindungen werden dabei durch die Bestrahlung deaktiviert.

Die erfindungsgemäßen Phosphorverbindungen unterscheiden sich dabei in überraschender Weise von anderen bekannten Inhibitoren von Platin-Katalysatoren, wie Ethinylcyclohexanol oder 1,3-Divinyltetramethyldisiloxan, mit denen keine Stabilisierung unter Ausschluss von UV-Licht bei der Lagerung von UV-vernetzenden Siliconzusammensetzungen erzielt wird.

Die erfindungsgemäßen Siliconzusammensetzungen haben weiterhin den Vorteil, dass die Vernetzung bei Raumtemperatur - damit energiearm - nur durch eine relativ kurze Bestrahlung mit UV-Licht erfolgt, und keine erhöhten Temperaturen notwendig sind, sodass die erfindungsgemäßen Siliconmassen auf temperaturempfindliche Substrate, die beispielsweise im Elektro- und Elektronikbereich und der Medizintechnik eingesetzt werden, aufgebracht und vulkanisiert werden können.

Ein weiterer Gegenstand der Erfindung ist die Verwendung der vernetzbaren Siliconzusammensetzungen zur Herstellung von Formkörpern, Vergussmaterialien, Klebern oder Beschichtungen.

Hergestellt werden sie durch Vernetzung der erfindungsgemäßen Siliconzusammensetzungen durch Bestrahlung mit Licht, insbesondere UV-Licht.

Ein weiterer Gegenstand der Erfindung ist ein Verfahren zum Vernetzen der erfindungsgemäßen Siliconzusammensetzungen durch Bestrahlung mit Licht, vorzugsweise UV-Licht, wobei die phosphororganischen Verbindungen (E) dabei ihre inhibierende Wirkung durch Deaktivierung verlieren und die Siliconzusammensetzungen vernetzen.

### Beispiele

Es werden nun Beispiele mit phosphororganischen Verbindungen gezeigt, die den positiven Effekt der genannten Stoffe auf die Lagerstabilität von UV-vernetzenden Siliconzusammensetzungen bei deren Lagerung unter Ausschluss von Licht belegen.

Als Maß für die Lagerstabilität wurde ein Gelierzeittest mittels eines sogenannten Geltimers herangezogen, der bei 120°C und unter Ausschluss von UV-Licht abläuft.

### Vergleichsversuch 1:

250 ml einer Mischung von 491 ppm Trimethyl(methyl-cyclopentadienyl)platinum(IV) (CAS-Nr. 94442-22-5; erhältlich zum Beispiel bei Sigma Aldrich Chemie GmbH, Eschenstr. 5, 82024 Taufkirchen) in einem Siliconpolymer (Vinyl-endständiges Polydimethylsiloxan, mit einer Viskosität von 1000 mPas bei 25°C), entsprechend 300 ppm Platin, die durch Verdünnung eines 8,18 Gew.-%igen Konzentrats (=5 Gew.% Platin) hergestellt wurde, wird unter Ausschluss von UV-Licht gelagert. Nach festgelegten Zeitabständen wird die Gelierzeit bei 120°C mittels eines Geltimers (GELNORM, Fa. Saur) in Anlehnung an DIN 16 945 bestimmt. Als Gelierzeit gilt die Zeitspanne zwischen dem Beginn der Prüfung und dem Zeitpunkt, an dem die katalysierte Masse vom flüssigen in den gelartigen Zustand übergeht. Diese Bestimmung erfolgt unter dem Ausschluss von UV-Licht.
Zur Bestimmung der Gelierzeit wird jeweils zu der Katalysator-mischung ein SiH-kettenständiges Polydimethylsiloxan, bei dem der Anteil von Si-gebundenem Wasserstoff 12 mol% beträgt, im Gewichtsverhältnis 9 : 1 zugegeben und 15 min mit 200 UpM in einem Laborflügelrührer eingemischt. Die Ergebnisse sind in Tabelle 1 zusammengefasst.

### Beispiele 1 bis 5:

Bei den Beispielen 1 bis 5 wird dieselbe Testreihe wie oben beim Vergleichsversuch 1 durchgeführt, wobei anschließend an die Zugabe des Katalysator-Konzentrats in das Vinyl-endständige Polydimethylsiloxan die entsprechende Menge der phosphororganischen Verbindung zugegeben, unter 1h Rühren bei 200 UpM mit einem Laborflügelrührer (RE 162, Fa. Janke und Kunkel) aufgelöst und anschließend über ein 120 µm-Sieb filtriert wird.
Die Bestimmung der Gelierzeit erfolgt wie beim Vergleichsversuch 1 beschrieben. Folgende phosphororganische Verbindungen wurden getestet:
(1) Triethylphosphit (CAS-Nr. 122-52-1)
(2) Triphenylphosphin (CAS-Nr. 603-35-0)
(3) Tris(2,4-di-tert-butylphenyl)phosphit (CAS-Nr. 31570-04-4)
(4) Tris(tert-butyldimethylsilyl)phosphit (CAS-Nr. 85197-27-9)
(5) 3,9-Bis(octadecyloxy)-2,4,8,10-tetraoxa-3,9-diphosphaspiro[5.5]undecan (CAS-Nr.3806-34-6)

### (1) bis (5) sind erhältlich bei Sigma Aldrich Chemie GmbH, Eschenstr. 5, 82024 Taufkirchen

Die Ergebnisse sind in Tabelle 1 zusammengefasst.

**Tabelle 1: Gelierzeittest mit erfindungsgemäßen phosphororganischen Verbindungen**

| Lagerdauer | Vergleichsversuch 1 | Beispiel 1 | Beispiel 2 | Beispiel 3 | Beispiel 4 | Beispiel 5 |
|---|---|---|---|---|---|---|
| | Ohne Zusatz | 300 Gew.-ppm (1) Triethylphosphit | 300 Gew.-ppm (2) Triphenylphosphin | 300 Gew.-ppm (3) Tris(2,4-di-tert-butylphenyl)-phosphit | 300 Gew.-ppm (4) Tris(tert-butyldimethyl-silyl)phosphit | 300 Gew.-ppm (5) 3,9-Bis(octa-decyloxy)-2,4,8,10-tetraoxa-3,9-diphosphaspiro [5.5]undecan |
| sofort | 11:48 min | 3h 30min | 7h 37min | 1h 30min | 11h 38min | 1h 39min |
| 1 Woche | 07:50 min | 3h 21min | 4h 13 min | 1h 29min | 13h 31min | 1h 19min |
| 4 Wochen | 05:21 min | 1h 41min | 4h 45min | 1h 30min | 15h 55min | 1h 8min |
| 8 Wochen | 04:20 min | 1h 53min | 3h 29min | 1h 21min | 15h 2min | 1h 18min |
| 3 Monate | 03:49 min | 1h 56min | 3h 49min | 1h 19min | 12h 24min | 1h 16min |
| 4 Monate | 03:00 min | 2h 3min | 3h 36min | 1h 16min | 12h 24min | 1h 15min |
| 5 Monate | - | 2h 16min | 3h 31min | 1h 8min | 11h 20min | 1h 12min |
| 6 Monate | - | 2h 14min | 4h 19min | 1h 3min | - | - |

Wie Tabelle 1 zu entnehmen ist, führen die erfindungsgemäßen Phosphorverbindungen im Vergleich zur Mischung ohne Zusatz einer Phosphorverbindung zu einer Verlängerung der Gelierzeit auf zum Teil unterschiedliches aber sehr hohes Niveau und damit zu einer Stabilisierung über mehrere Monate.

Die fünf phosphororganischen Verbindungen gemäß den Beispielen 1 - 5 stehen exemplarisch für eine gesamte Stoffgruppe. Es folgen nun Beispiele von weiteren Phosphorverbindungen. Die in den Beispielen 1 - 5 beschriebenen Versuche können mit diesen Verbindungen ebenso durchgeführt werden. Es kann eine ähnliche Wirkung auf die Lagerstabilität erwarten werden:
- Triphenylphosphit
- Tris(2-tert-butyl-4-methylphenyl)phosphit
- Tris(1-adamantanemethyl)phosphit
- Triisopropylphosphit
- Triisodecylphosphit
- Tris(2-ethylhexyl)phosphit
- 3,9-bis(2,4-ditert-butylphenoxy)-2,4,8,10-tetraoxa-3,9-diphosphaspiro[5.5]undecane
- Distearylpentaerythritdiphosphit
- Bis(2,6-di-tertbutyl-4-methylphenyl)-pentaerythritdiphosphit
- Tris(nonylphenyl)phosphit
- Tris[(2-phenyl)phenyl]phosphit
- Tris[(3-phenyl)phenyl]phosphit
- Tris[(4-phenyl)phenyl]phosphit
- Tris[(5-phenyl)phenyl]phosphit
- Tris[(6-phenyl)phenyl]phosphit
- Tris[(2,4-diphenyl)phenyl]phosphit
- Tris[(2,6-diphenyl)phenyl]phosphit
- Tris[(3,5-diphenyl)phenyl]phosphit
- Tris(2,6-diisopropylphenyl)phosphit
- Tris(2-methylphenyl)phosphit
- Tris(2,4-dioctylphenyl)phosphit
- Tri(o-tolyl)phosphit
- Tricyclohexylphosphit
- Trilaurylphosphit
- Diisodecylphenylphosphit
- 2-Ethylhexyldiphenylphosphit
- Benzyldiphenylphosphin
- *tert*-Butyldiphenylphosphin
- Cyclohexyldiphenylphosphin
- Tri-n-butylphosphin
- Tri-tertbutyl-phosphin
- Tri-o-tolyl-phosphin
- Tri(*p*-tolyl)phosphin
- Tricylohexylphosphin
- Dimethylphenylphosphin
- Tris(trimethylsilyl)phosphine

### Vergleichsversuche 2 bis 5:

Die Versuchsdurchführung der Gelierzeittest erfolgt wie bei den Beispielen 1 bis 5 beschrieben. Statt der erfindungsgemäßen Phosphorverbindung wurde jedoch 1,3-Divinyltetramethyldisiloxan bzw. Ethinylcyclohexanol, welches bekannte Inhibitoren für Platinkatalysatoren gemäß dem Stand der Technik sind, in den in Tabelle 2 bzw. 3 jeweils angegebenen Mengen (Vergleichsversuche 2/3 bzw. 4/5) zugegeben. Als Referenz diente Vergleichsversuch 1. Die Ergebnisse sind in Tabelle 2 bzw. 3 zusammengefasst.

**Tabelle 2: Gelierzeittest mit 1,3-Divinyltetramethyldisiloxan**

| Lagerdauer | Vergleichsversuch 1 | Vergleichsversuch 2 | | Vergleichsversuch 3 | |
|---|---|---|---|---|---|
| | Ohne Zusatz | Mit 240 Gew.-ppm Zusatz | | Mit 480 Gew.-ppm Zusatz | |
| sofort | 11:48 min | 22:12 | min | 31:00 | min |
| 1 Woche | 07:50 min | 16:01 | min | 22:00 | min |
| 4 Wochen | 05:21 min | 5:30 | min | 8:00 | min |
| 8 Wochen | 04:20 min | 4:49 | min | 6:21 | min |
| 3 Monate | 03:49 min | 3:29 | min | 4:31 | min |
| 4 Monate | 03:00 min | 3:27 | min | 4:17 | min |
| 5 Monate | - | 3:20 | min | 4:09 | min |
| 6 Monate | - | 2:49 | min | 3:49 | min |

**Tabelle 3: Gelierzeittest mit Ethinylcyclohexanol**

| Lagerdauer | Vergleichsversuch 1 | Vergleichsversuch 4 | | Vergleichsversuch 5 | |
|---|---|---|---|---|---|
| | Ohne Zusatz | Mit 5 Gew.-ppm Zusatz | | Mit 14 Gew.-ppm Zusatz | |
| sofort | 11:48 min | 13:41 | min | 1 h 47 | min |
| 1 Woche | 07:50 min | 7:41 | min | 44:10 | min |
| 4 Wochen | 05:21 min | 3:32 | min | 10:20 | min |
| 8 Wochen | 04:20 min | 3:29 | min | 10:41 | min |
| 3 Monate | 03:49 min | 3:28 | min | 7:31 | min |
| 4 Monate | 03:00 min | 3:19 | min | 8:30 | min |
| 5 Monate | - | - | | 8:40 | min |
| 6 Monate | - | - | | 8:00 | min |

Bei Zusatz von 1,3-Divinyltetramethyldisiloxan und Ethinylcyclohexanol, die im Stand der Technik zur Regulierung der Vernetzungsgeschwindigkeit eingesetzt werden, nimmt die Lagerstabilität nach einer Woche deutlich ab. Es kann kein dauerhaft stabiler Zustand erreicht werden, wie bei Zusatz von den erfindungsgemäßen phosphororganischen Verbindungen.

### Vergleichsversuch 6 und 7:

Versuchsdurchführung der Gelierzeittest erfolgt wie bei den Beispielen 1 bis 5 beschrieben. Statt der erfindungsgemäßen Phosphorverbindung wurde jedoch Trioctylamin bzw. 1,3-Divinyltetramethyldisilazan, Inhibitoren für Platinkatalysatoren gemäß dem Stand der Technik, in der in Tabelle 4 bzw. 5 angegebenen Menge (Vergleichsversuch 6 bzw. 7) zugegeben. Als Referenz diente Vergleichsversuch 1. Die Ergebnisse sind in Tabelle 4 bzw. 5 zusammengefasst.

**Tabelle 4: Gelierzeittest mit Trioctylamin**

| Lagerdauer | Vergleichsversuch 1 | Vergleichsversuch 6 | |
|---|---|---|---|
| | Ohne Zusatz | Mit 300 Gew.-ppm Zusatz | |
| sofort | 11:48 min | 14:02 | min |
| 1 Woche | 07:50 min | 4:59 | min |
| 4 Wochen | 05:21 min | 2:38 | min |
| 8 Wochen | 04:20 min | - | |
| 3 Monate | 03:49 min | - | |
| 4 Monate | 03:00 min | - | |
| 5 Monate | - | - | |

**Tabelle 5: Gelierzeittest mit 1,3-Divinyltetramethyldisilazan**

| Lagerdauer | VergleichsVersuch 1 | Vergleichsversuch 7 | |
|---|---|---|---|
| | Ohne Zusatz | Mit 10 Gew.-ppm Zusatz | |
| sofort | 11:48 min | 14:10 | min |
| 1 Woche | 07:50 min | 3:50 | min |
| 4 Wochen | 05:21 min | 3:39 | min |
| 8 Wochen | 04:20 min | 2:38 | min |
| 3 Monate | 03:49 min | - | |
| 4 Monate | 03:00 min | - | |
| 5 Monate | - | - | |

Bei Zusatz von 1,3-Divinyltetramethyldisilazan und Trioctylamin sind die Mischungen nicht lagerstabil und führen sogar noch zu einer stärkeren Instabilität als bei den Mischungen ohne Zusatz. Offenbar führen diese Stoffe zu einer irreversiblen Zerstörung des UV-aktiven Platinkomplexes.

### Vergleichsversuch 8 und Beispiele 6 bis 8:

Zur Beurteilung der UV-Aktivität wurde die Topfzeit (= Zeit bis zum Erreichen einer Viskosität von 300000 mPas bei 25°C) gemäß ISO 6721-10 (Komplexe Scherviskosität unter Anwendung eines Parallelplatten-Schwingungsrheometers) in einem Rheometer von Anton Paar MCR 302 nach 60 Sekunden Bestrahlung mit 6 mW (Strahler: Omnicure S1000, 320-500 nm; Abstand zur Probe: 22mm) von folgender Mischung bestimmt:
Mischung aus 9,1 Gew.-% einer in den Beispielen 1 - 5 beschriebenen Katalysator-Mischung von Trimethyl(methylcyclopentadienyl)platinum(IV) in einem Siliconpolymer (Vinyl-endständiges Polydimethylsiloxan, Viskosität 1000 mPas bei 25°C), den in Tabelle 6 genannten phosphororganischen Verbindungen (Beispiele 6 - 8, Mengenangaben bezogen auf die Endzusammensetzung) bzw. ohne Zusatz (Vergleichsversuch 8) und 90,9 Gew.-% einer durch Hydrosilylierung vernetzbaren Zubereitung, enthaltend lineare und verzweigte SiH- und vinylfunktionelle Siloxane (käuflich erwerblich unter der Bezeichnung SEMICOSIL® 912 bei der Firma Wacker Chemie AG, D-München).
Mischzeit für 22 g Ansatzgröße: 20 s bei 2500 U/min mit Speedmixer DAC 150 FV, Fa. Hauschild.
Geräteeinstellungen von Anton Paar MCR 302:
Temperatur: 25 °C
Messart: Oszillation
Messspalt: 0,2 mm
Deformation: 0,1%
Frequenz: 0,5 Hz
Probevolumen: 0,4 ml

Zusätzlich wurde jeweils die Katalysator-Mischung mit erfindungsgemäßer phosphororganischer Verbindung 6 Monate bei 25 °C unter Lichtausschluss gelagert und anschließend die Topfzeit nach Zugabe der oben genannten vernetzbaren Zubereitung aus SiH- und vinylfunktionellen Siloxanen (SEMICOSIL® 912 der Wacker-Chemie) bestimmt, analog wie oben beschrieben. Die Ergebnisse sind in Tabelle 6 zusammengefasst.

Die Härte wird durch eine Penetrationsmessung nach DIN ISO 2137 bestimmt (Penetrometer PNR 12, Fa. Saur Fa. Anton-Paar, Kegel 9,38 g, Eindringzeit 5 sec). Dazu wird 50 g der oben genannten Mischung zur Beurteilung der UV-Aktivität (Mischparameter: 100g Mischung in 150ml-Becher in einem Speedmixer DAC 150 FV, Fa. Hauschild, 60 sec bei 2500 U/min) in einen 125 ml-Becher gegeben und nach einer Bestrahlung mit 70 mW/cm² (UVACUBE 2000, Fa. Hönle, 230-400 nm) für 10 sec und einer Temperung mit 30 min/150°C vulkanisiert. Die Ergebnisse sind in Tabelle 6 zusammengefasst.

**Tabelle 6:**

| | Vergl.-versuch 8 | Beispiel 6 | Beispiel 7 | Beispiel 8 |
|---|---|---|---|---|
| | Ohne Zusatz | Mit (1) Triethylphosphit (27 Gew.-ppm) | Mit (2) Triphenylphosphin (27 Gew.-ppm) | Mit (3) Tris(2,4-di-tert-butylphenyl)-phosphit (27 Gew.-ppm) |
| Topfzeit | 372 s | 717 s | 797 s | 665 s |
| Penetration | 58 1/10 mm | 62 1/10 mm | 63 1/10 mm | 61 1/10 mm |
| Topfzeit (6 Monate Lagerung) | 447 s | 601 s | 780 s | 656 s |

Die Gemische vulkanisieren nach UV-Bestrahlung problemlos, die Verlangsamung der Vernetzung durch die verwendeten phosphororganischen Verbindungen befindet sich im akzeptablen Rahmen. Die Penetration der Vulkanisate ist im Vergleich zur Referenzprobe (ohne Zusatz) nahezu unverändert. Die Topfzeiten haben sich nach 6 Monaten Lagerung kaum geändert.

### Beispiel 9:

In weiteren Versuchen wurde zur Klärung der Abläufe bei der Bestrahlung mit UV-Licht eine Katalysator-Mischung enthaltend 491 Gew.-ppm Trimethyl(methylcyclopentadienyl)platinum(IV) (=300 Gew.-ppm Platin) in Vinyl-endständigem Polydimethylsiloxan mit einer Viskosität von 1000 mPas bei 25°C) und unterschiedlichen Mengen Tris(2,4-di-tert-butylphenyl)phosphit hergestellt und mit 70 mW/cm² für 10 sec bestrahlt. Der Gehalt an Tris(2,4-di-tert-butylphenyl)phosphit wurde vor und nach Bestrahlung mittels ¹H-NMR durch Auswertung des Signals der tert-Butylgruppe bestimmt (δ=1,3 ppm, CDCl₃, 500 MHz, 300 K). Die Ergebnisse sind in Tabelle 7 zusammengefasst.

**Tabelle 7:**

| | Gehalt vor Bestrahlung | Gehalt nach Bestrahlung |
|---|---|---|
| Tris(2,4-di-tert-butylphenyl) phosphit | 288ppm | 0 ppm |
| Tris(2,4-di-tert-butylphenyl) phosphit | 448 ppm | 0 ppm |
| Tris(2,4-di-tert-butylphenyl) phosphit | 47 ppm | 0 ppm |

Wie Tabelle 7 zu entnehmen ist, wird die Phosphorverbindung durch die Bestrahlung unter den für die Vernetzung typischen Rahmenbedingungen (Bestrahlungsintensität und -dauer) deaktiviert und ist nach der Bestrahlung nicht mehr nachweisbar.

### Vergleichsversuch 9 und Beispiele 10 bis 12:

Mit einigen der erfindungsgemäßen phosphororganischen Verbindungen wurden auch einkomponentige Gemische formuliert und die Viskositätsentwicklung während der Lagerung verfolgt. Die Mischungen wurden folgendermaßen hergestellt: Es wurden in einem 150 ml-PE-Becher eine Mischung aus 9,1 Gew.-% einer in den Beispielen 1 - 5 beschriebenen Katalysator-Mischung in einem Siliconpolymer (Vinyl-endständiges Polydimethylsiloxan), den in Tabelle 8 genannten phosphororganischen Verbindungen in den in der Tabelle 8 genannten Mengen (Beispiele 10 - 12, Mengenangaben bezogen auf die Endzusammensetzung) bzw. ohne Zusatz (Vergleichsversuch 9) und 90,9 Gew.-% einer durch Hydrosilylierung vernetzbaren Zubereitung, enthaltend lineare und verzweigte SiH- und vinylfunktionelle Siloxane (käuflich erwerblich unter der Bezeichnung SEMICOSIL® 912 bei der Firma Wacker Chemie AG, D-München) hergestellt, im Speedmixer 60 sec bei 2500 U/min gerührt und unter Lichtausschluss gelagert. Nach festgelegten Zeitabständen wurde die Viskosität mit einem Platte-Kegel-Viskosimeter (Fa. Anton-Paar MCR 302) nach DIN 53019 (Messung von Viskositäten und Fließkurven mit Rotationsviskosimetern) bestimmt (Probemenge: 0,5 ml, Messzeit: 3min, Messwerte: 30, Kegel CP50-2, Temp. 25°C).
Die Ergebnisse sind in Tabelle 8 zusammengefasst.

**Tabelle 8:**

| Lagerdauer | Vergl.-versuch 9 | Beispiel 10 | Beispiel 11 | Beispiel 12 |
|---|---|---|---|---|
| | Ohne Zusatz | 27 Gew.-ppm (2) Triphenylphosp hin | 27 Gew.-ppm (3) Tris(2,4-di-tert-butylphenyl) phosphit | 4,5 Gew.-ppm (3) Tris(2,4-di-tert-butylphenyl)-phosphit |
| sofort | 1030 mPas | 1090 mPas | 1090 mPas | 1100 mPas |
| 3 Tage | 1050 mPas | 1090 mPas | 1090 mPas | 1090 mPas |
| 9 Wochen | 3183 mPas | 1099 mPas | 1100 mPas | 1090 mPas |
| 12 Wochen | 6340 mPas | 1140 mPas | 1099 mPas | 1111 mPas |
| 13 Wochen | 7736 mPas | 1093 mPas | 1090 mPas | 1101 mPas |
| 14 Wochen | 8808 mPas | 1096 mPas | 1099 mPas | 1094 mPas |
| 16 Wochen | 13079 mPas | 1095 mPas | 1077 mPas | 1092 mPas |
| 17 Wochen | 15822 mPas | 1102 mPas | 1090 mPas | 1110 mPas |
| 19 Wochen | vulkanisiert | 1105 mPas | 1099 mPas | 1099 mPas |
| 25 Wochen | vulkanisiert | 1132 mPas | 1103 mPas | 1121 mPas |
| 28 Wochen | vulkanisiert | 1149 mPas | 1100 mPas | 1107 mPas |
| 30 Wochen | vulkanisiert | 1167 mPas | 1091 mPas | 1116 mPas |
| 36 Wochen | vulkanisiert | 1223 mPas | 1090 mPas | 1112 mPas |

Die Viskosität bleibt bei Zusatz einer erfindungsgemäßen phosphororganischen Verbindung über einen Zeitraum von rund 30 Wochen stabil, während bei einer Mischung ohne Zusatz bereits nach wenigen Wochen eine deutliche Erhöhung der Viskosität feststellbar ist und nach spätestens 19 Wochen vollständige Vulkanisation eintritt.

## Patentansprüche

1. Durch Bestrahlung mit Licht, vorzugsweise UV-Licht, vernetzbare Siliconzusammensetzungen enthaltend
(A) Organosiliciumverbindungen, die Si-C-gebundene Reste mit aliphatischen Kohlenstoff-Kohlenstoff-Mehrfachbindungen aufweisen,
(B) Organosiliciumverbindungen mit Si-gebundenen Wasserstoffatomen
oder anstelle von (A) und (B)
(C) Organosiliciumverbindungen, die Si-C-gebundene Reste mit aliphatischen Kohlenstoff-Kohlenstoff-Mehrfachbindungen und Si-gebundene Wasserstoffatome aufweisen,
(D) durch Licht der Wellenlänge von 200 bis 500 nm, vorzugsweise UV-Licht der Wellenlänge 200 bis 400 nm, aktivierbare Platinkatalysatoren ausgewählt aus der Gruppe der Cyclopentadienyl-Komplexe des Platins und
(E) phosphororganische Verbindungen ausgewählt aus der Gruppe der Formeln
P(=O)ᵤ[(OR¹⁰)]ₛ[R¹¹]ₜ (I),
P[(O)ᵢSiR¹²₃]₃ (II), 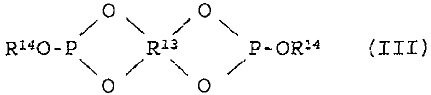
und deren Mischungen, wobei
R¹⁰ und R¹¹ gleich oder verschieden sind und jeweils einen Alkylrest der Formel C_{J}H₂ⱼ₊₁ mit j=2-31 oder einen Alkenylrest der Formel CₖH₂ₖ₋₁ mit k=2-31 oder einen Aryl- oder Alkylarylrest der Formel - (C₆H_{5-w}) - (CᵥH₂ᵥ₊₁)_{w} mit v = 1-18 und w = 0-5, bedeuten,
R¹² gleich oder verschieden ist und einen einwertigen Kohlenwasserstoffrest mit 1 bis 18 C-Atomen bedeutet,
R¹³ ein vierwertiger Kohlenwasserstoffrest mit 5 bis 30 C-Atomen, bedeutet,
R¹⁴ gleich oder verschieden ist und die Bedeutung von R¹⁰ hat,
s 0, 1, 2 oder 3 ist,
t 0, 1, 2 oder 3 ist,
mit der Maßgabe, dass die Summe s+t = 3 ist,
u 0 oder 1, bevorzugt 0, ist und
i 0 oder 1, bevorzugt 1, ist.

2. Vernetzbare Siliconzusammensetzungen nach Anspruch 1, **dadurch gekennzeichnet, dass** die phosphororganischen Verbindungen (E) in Mengen von 0,001 bis 10 000 Gew.-ppm, vorzugsweise 1 bis 1 000 Gew.-ppm, jeweils bezogen auf das Gesamtgewicht der Siliconzusammensetzungen, eingesetzt werden.

3. Vernetzbare Siliconzusammensetzungen nach Anspruch 1 oder 2, **dadurch gekennzeichnet, dass**
R¹⁰ ein Ethyl-, Propyl-, Phenyl-, Nonylphenyl-, Dinonylphenyl-, 2-Ethylhexyl-, 2,4-Di-tert-butylphenylrest oder 2-tert-Butyl-4-methylphenylrest,
R¹¹ ein Phenylrest,
R¹² ein Methyl-, Ethyl-, n-Propyl-, Isopropyl-, n-Butyl-, tert-Butyl- oder Hexylrest, bevorzugt ein Methyl- oder tert-Butylrest,
R¹³ ein Rest der Formel C(CH₂)₄- und
R¹⁴ ein Octadecyl-, 2,6-Di-tert-butyl-4-methylphenyl-, oder ein 2,4-Di-tert-butylphenylrest ist.

4. Vernetzbare Siliconzusammensetzungen nach Anspruch 1, 2 oder 3, **dadurch gekennzeichnet, dass** als phosphororganische Verbindungen (E)
Tris(2,4-di-tert-butylphenyl)phosphit, Triethylphosphit, Triphenylphosphin, Tris(tert-butyldimethylsilyl)phosphit oder 3,9-Bis(octadecyloxy)-2,4,8,10-tetraoxa-3,9-diphosphaspiro[5. 5]undecan
eingesetzt werden.

5. Vernetzbare Siliconzusammensetzungen nach einem der Ansprüche 1 bis 4, **dadurch gekennzeichnet, dass** als Organosiliciumverbindungen (A) lineare oder verzweigte oder harzartige Organopolysiloxane aus Einheiten der Formel
RₐR¹_{b}SiO_{(4-a-b)/2} (IV),
eingesetzt werden, wobei
R gleich oder verschieden ist und einen einwertigen, gegebenenfalls substituierten, von aliphatischen Kohlenstoff-Kohlenstoff-Mehrfachbindungen freien Si-C-gebundenen Kohlenwasserstoffrest mit 1 bis 18 Kohlenstoffatomen je Rest bedeutet und
R¹ gleich oder verschieden ist und einen einwertigen Si-C-gebundenen Kohlenwasserstoffrest mit terminaler, aliphatischer Kohlenstoff-Kohlenstoff-Mehrfachbindung mit 2 bis 10 Kohlenstoffatomen je Rest bedeutet,
a 0, 1, 2 oder 3 ist,
b 0, 1 oder 2 ist
und die Summe a+b≤3 ist,
mit der Maßgabe, dass die Organopolysiloxane mindestens 2 Reste R¹ enthalten.

6. Vernetzbare Siliconzusammensetzungen nach einem der Ansprüche 1 bis 5, **dadurch gekennzeichnet, dass** als Organosiliciumverbindungen (A) Organopolysiloxane der Formel
R¹_{d}R_{3-d}SiO(SiR₂O)ₙ(SiRR¹O)ₘSiR_{3-d}R¹_{d} (V)
eingesetzt werden, wobei
R und R¹ die im Anspruch 5 dafür angegebene Bedeutung haben, d 0, 1, 2 oder 3, bevorzugt 1, bedeutet,
m 0 oder eine ganze Zahl von 1 bis 200 ist und
n 0 oder eine ganze Zahl von 1 bis 1800 ist,
mit der Maßgabe, dass die Organopolysiloxane der Formel (V) mindestens zwei Reste R¹ enthalten.

7. Vernetzbare Siliconzusammensetzungen nach einem der Ansprüche 1 bis 6, **dadurch gekennzeichnet, dass** als Organosiliciumverbindungen (B) lineare, cyclische oder verzweigte Organopolysiloxane aus Einheiten der Formel
RₑH_{f}SiO_{(4-e-f)/2} (VI),
eingesetzt werden, wobei
R die im Anspruch 5 dafür angegebene Bedeutung hat,
e 0, 1, 2 oder 3,
f 0, 1 oder 2
und die Summe von e+f≤3 ist,
mit der Maßgabe, dass die Organopolysiloxane mindestens 2 Si-gebundene Wasserstoffatome enthalten.

8. Vernetzbare Siliconzusammensetzungen nach einem der Ansprüche 1 bis 7, **dadurch gekennzeichnet, dass** als Organosiliciumverbindungen (B) Organopolysiloxane der Formel
HₓR₃₋ₓSiO(SiR₂O)_{y}(SiRHO)_{z}SiR₃₋ₓHₓ (VII)
eingesetzt werden, wobei
R die im Anspruch 5 dafür angegebene Bedeutung hat,
x 0, 1 oder 2,
y 0 oder eine ganze Zahl von 1 bis 1500 und
z 0 oder eine ganze Zahl von 1 bis 200 ist,
mit der Maßgabe, dass die Organopolysiloxane der Formel (VII) mindestens 2 Si-gebundene Wasserstoffatome enthalten.

9. Vernetzbare Siliconzusammensetzungen nach einem der Ansprüche 1 bis 8, **dadurch gekennzeichnet, dass** als Platinkatalysatoren (D) Cyclopentadienyl-Komplexe des Platins der Formel (XI) 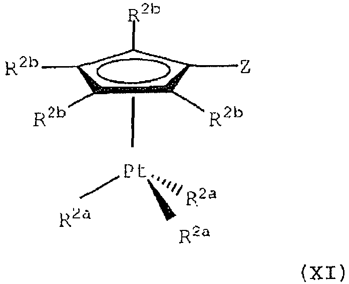 eingesetzt werden, wobei
Z ein Wasserstoffatom oder ein linearer oder verzweigter aliphatischer Kohlenwasserstoffrest oder ein Rest der Formel
- (CR'₂)_{g}-SiR⁴ₒR⁵ₚR⁹_{q}
ist, wobei
g eine ganze Zahl von 1 bis 8,
o 0, 1 oder 2,
p 0, 1, 2 oder 3 ist und
q 0, 1, 2 oder 3 ist
mit der Maßgabe, dass die Summe (o+p+q)≤3 ist,
R' gleich oder verschieden ist und ein Wasserstoffatom oder einen monovalenten, unsubstituierten oder substituierten Kohlenwasserstoffrest bedeutet,
R^{2a} gleich oder verschieden ist und einen Alkyl-, Aryl-, Arylalkyl- oder Alkylarylrest, die durch Heteroatome, wie O-, N-, S oder P, unterbrochen sein können, bedeutet, wobei die Wasserstoffe durch Halogenatome oder Reste der Formel -SiR²₃ substituiert sein können, wobei
R² gleich oder verschieden ist und einen monovalenten, unsubstituierten oder substituierten, linearen, cyclischen oder verzweigten Kohlenwasserstoffrest bedeutet,
R^{2b} gleich oder verschieden ist und ein Wasserstoffatom oder einen monovalenten, unsubstituierten oder substituierten, linearen oder verzweigten, aliphatisch gesättigten oder ungesättigten oder aromatisch ungesättigten Kohlenwasserstoffrest bedeutet, in dem einzelne Kohlenstoffatome durch O-, N-, S- oder P-Atome ersetzt sein können und die mit dem Cyclopentadienylrest annelierte Ringe bilden können, oder einer oder mehrere Reste R^{2b} einen Rest der Formel -SiR³₃ bedeuten kann, wobei
R³ gleich oder verschieden ist und einen monovalenten, unsubstituierten oder substituierten, aliphatisch gesättigten Kohlenwasserstoffrest, der durch Heteroatome unterbrochen sein kann, oder einen aliphatisch ungesättigten, gegebenenfalls substituierten Kohlenwasserstoffrest oder einen über Sauerstoff angebundenen Siloxyrest bedeutet,
R⁴ gleich oder verschieden ist und ein Wasserstoffatom oder einen monovalenten, unsubstituierten oder substituierten, linearen oder verzweigten, aliphatisch gesättigten oder ungesättigten oder aromatisch ungesättigten Kohlenwasserstoffrest, in dem einzelne Kohlenstoffatome durch O-, N-, S- oder P-Atome ersetzt sein können, bedeutet,
R⁵ gleich oder verschieden ist und eine hydrolysierbare funktionelle Gruppe, ausgewählt aus der Gruppe von
Carboxy -O-C(O)R⁶,
Oxim -O-N=CR⁶₂,
Alkoxy -OR⁶,
Alkenyloxy -O-R⁸
Amid -NR⁶-C(O)R⁷,
Amin -NR⁶R⁷,
Aminoxy -O-NR⁶R⁷,
bedeutet, wobei
R⁶ gleich oder verschieden ist und ein H-Atom oder einen Alkyl-, Aryl-, Arylalkyl- oder Alkylarylrest bedeutet,
R⁷ gleich oder verschieden ist und einen Alkyl-, Aryl-, Arylalkyl- oder Alkylarylrest bedeutet,
R⁸ einen linearen oder verzweigten, aliphatisch ungesättigten organischen Rest bedeutet,
R⁹ gleich oder verschieden ist und einen monovalenten linearen, cyclischen oder verzweigten, oligomeren oder polymeren siliciumorganischen Rest bedeutet, der eine oder mehrere Gruppen ausgewählt aus
a) aliphatisch gesättigte oder ungesättigte Gruppen mit 1 bis 30 C-Atomen, in denen einzelne Kohlenstoffatome durch Hal, O-, N-, S- oder P-Atome ersetzt sein können,
b) aromatische Gruppen mit 1 bis 30 C-Atomen, in denen einzelne Kohlenstoffatome durch Hal, O-, N-, S- oder P-Atome ersetzt sein können,
c) Si-gebundene Wasserstoffatome
d) Hydroxylgruppen und
e) hydrolysierbare Gruppen
enthalten kann.

10. Vernetzbare Siliconzusammensetzungen gemäß einem der Ansprüche 1 bis 9, **dadurch gekennzeichnet, dass** als Platinkatalysator (D) der Methylcyclopentadienyltrimethylplatin-Komplex
eingesetzt wird.

11. Verfahren zur Herstellung der vernetzbaren Siliconzusammensetzungen gemäß einem der Ansprüche 1 bis 10, **dadurch gekennzeichnet, dass**
(A) Organosiliciumverbindungen, die Si-C-gebundene Reste mit aliphatischen Kohlenstoff-Kohlenstoff-Mehrfachbindungen aufweisen,
(B) Organosiliciumverbindungen mit Si-gebundenen Wasserstoffatomen
oder anstelle von (A) und (B)
(C) Organosiliciumverbindungen, die Si-C-gebundenc Reste mit aliphatischen Kohlenstoff-Kohlenstoff-Mehrfachbindungen und Si-gebundene Wasserstoffatome aufweisen,
(D) durch Licht der Wellenlänge von 200 bis 500 nm, vorzugsweise UV-Licht der Wellenlänge 200 bis 400 nm, aktivierbare Platinkatalysatoren ausgewählt aus der Gruppe der Cyclopentadienyl-Komplexe des Platins und
(E) phosphororganische Verbindungen ausgewählt aus der Gruppe der Formeln (I), (II) und (III) miteinander vermischt werden.

12. Verwendung der vernetzbaren Zusammensetzungen nach einem der Ansprüche 1 bis 10 zur Herstellung von Formkörpern, Vergussmaterialien, Klebern oder Beschichtungen.

13. Verfahren zum Vernetzen der Siliconzusammensetzungen nach einem der Ansprüche 1 bis 10 durch Bestrahlung mit Licht, vorzugsweise UV-Licht, wobei die phosphororganischen Verbindungen (E) dabei ihre inhibierende Wirkung durch Deaktivierung verlieren und die Siliconzusammensetzungen vernetzen.

## Claims

1. Silicone compositions that can be crosslinked by irradiation with light, preferably UV light, comprising
(A) organosilicon compounds comprising Si-C-bonded radicals having aliphatic carbon-carbon multiple bonds,
(B) organosilicon compounds comprising hydrogen atoms bonded to Si
or instead of (A) and (B)
(C) organosilicon compounds comprising Si-C-bonded radicals having aliphatic carbon-carbon multiple bonds and hydrogen atoms bonded to Si,
(D) platinum catalysts that can be activated by light of wavelength 200 to 500 nm, preferably UV light of wavelength 200 to 400 nm, selected from the group of cyclopentadienyl complexes of platinum and
(E) organophosphorus compounds selected from the group of the formulae
P(=O)ᵤ[(OR¹⁰)]ₛ[R¹¹]ₜ (I),
P[(O)ᵢSiR¹²₃]₃ (II), 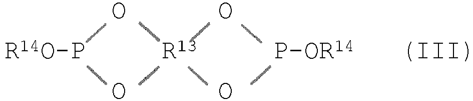
and mixtures thereof, wherein
R¹⁰ and R¹¹ are the same or different and are in each case an alkyl radical of the formula CⱼH₂ⱼ₊₁ where j = 2-31 or an alkenyl radical of the formula CₖH₂ₖ₋₁ where k = 2-31 or an aryl or alkylaryl radical of the formula -(C₆H_{5-w}) - (CᵥH₂ᵥ₊₁)_{w} where v = 1-18 and w = 0-5,
R¹² is the same or different and is a monovalent hydrocarbon radical having 1 to 18 carbon atoms,
R¹³ is a tetravalent hydrocarbon radical having 5 to 30 carbon atoms,
R¹⁴ is the same or different and has the definition of R¹⁰,
s is 0, 1, 2 or 3,
t is 0, 1, 2 or 3,
with the proviso that the sum of s+t = 3,
u is 0 or 1, preferably 0, and
i is 0 or 1, preferably 1.

2. Silicone compositions that can be crosslinked according to Claim 1, **characterized in that** the organophosphorus compounds (E) are used in amounts from 0.001 to 10 000 ppm by weight, preferably 1 to 1 000 ppm by weight, based in each case on the total weight of the silicone compositions.

3. Silicone compositions that can be crosslinked according to Claim 1 or 2, **characterized in that** R¹
⁰ is an ethyl, propyl, phenyl, nonylphenyl, dinonylphenyl, 2-ethylhexyl, 2,4-di-tert-butylphenyl radical or 2-tert-butyl-4-methylphenyl radical,
R¹¹ is a phenyl radical,
R¹² is a methyl, ethyl, n-propyl, isopropyl, n-butyl, tert-butyl or hexyl radical, preferably a methyl or tert-butyl radical,
R¹³ is a radical of the formula C(CH₂)₄- and
R¹⁴ is an octadecyl, 2,6-di-tert-butyl-4-methylphenyl or a 2,4-di-tert-butylphenyl radical.

4. Silicone compositions that can be crosslinked according to Claim 1, 2 or 3, **characterized in that** the organophosphorus compounds (E) used are tris(2,4-di-tert-butylphenyl) phosphite,
triethyl phosphite, triphenylphosphine, tris(tert-butyldimethylsilyl) phosphite or 3,9-bis(octadecyloxy)-2,4,8,10-tetraoxa-3,9-diphosphaspiro[5.5]undecane.

5. Silicone compositions that can be crosslinked according to any of Claims 1 to 4, **characterized in that** the organosilicon compounds (A) used are linear or branched or resinous organopolysiloxanes composed of units of the formula
RₐR¹_{b}SiO_{(4-a-b)/2} (IV),
wherein
R is the same or different and is a monovalent, optionally substituted, Si-C-bonded hydrocarbon radical having 1 to 18 carbon atoms per radical, free of aliphatic carbon-carbon multiple bonds and
R¹ is the same or different and is a monovalent SiC-bonded hydrocarbon radical, comprising 2 to 10 carbon atoms per radical, having a terminal, aliphatic carbon-carbon multiple bond,
a is 0, 1, 2 or 3,
b is 0, 1 or 2
and the sum of a+b is ≤3,
with the proviso that the organopolysiloxanes comprise at least 2 radicals R¹.

6. Silicone compositions that can be crosslinked according to any of Claims 1 to 5, **characterized in that** the organosilicon compounds (A) used are organopolysiloxanes of the formula
R¹_{d}R_{3-d}SiO(SiR₂O)ₙ(SiRR¹O)ₘSiR_{3-d}R¹_{d} (V),
wherein
R and R¹ have the definition specified therefor in Claim 5,
d is 0, 1, 2 or 3, preferably 1,
m is 0 or an integer from 1 to 200 and
n is 0 or an integer from 1 to 1800,
with the proviso that the organopolysiloxanes of the formula (V) comprise at least two radicals R¹.

7. Silicone compositions that can be crosslinked according to any of Claims 1 to 6, **characterized in that** the organosilicon compounds (B) used are linear, cyclic or branched organopolysiloxanes composed of units of the formula
RₑH_{f}SiO_{(4-e-f)/2} (VI),
wherein
R has the definition specified therefor in Claim 5, e is 0, 1, 2 or 3,
f is 0, 1 or 2
and the sum of e+f is ≤3,
with the proviso that the organopolysiloxanes comprise at least 2 hydrogen atoms bonded to Si.

8. Silicone compositions that can be crosslinked according to any of Claims 1 to 7, **characterized in that** the organosilicon compounds (B) used are organopolysiloxanes of the formula
HₓR₃₋ₓSiO(SiR₂O)_{y}(SiRHO)_{z}SiR₃₋ₓHₓ (VII),
wherein
R has the definition specified therefor in Claim 5,
x is 0, 1 or 2,
y is 0 or an integer from 1 to 1500 and
z is 0 or an integer from 1 to 200,
with the proviso that the organopolysiloxanes of the formula (VII) comprise at least 2 hydrogen atoms bonded to Si.

9. Silicone compositions that can be crosslinked according to any of Claims 1 to 8, **characterized in that** the platinum catalysts (D) used are cyclopentadienyl complexes of platinum of the formula (XI) 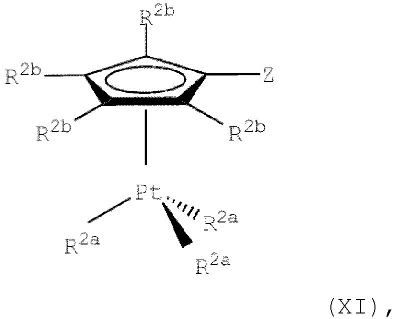 wherein
Z is a hydrogen atom or a linear or branched aliphatic hydrocarbon radical or a radical of the formula
- (CR'₂)_{g}-SiR⁴ₒR⁵ₚR⁹_{q},
wherein
g is an integer from 1 to 8,
o is 0, 1 or 2,
p is 0, 1, 2 or 3 and
q is 0, 1, 2 or 3
with the proviso that the sum of (o+p+q) is ≤3,
R' is the same or different and is a hydrogen atom or a monovalent, unsubstituted or substituted hydrocarbon radical,
R^{2a} is the same or different and is an alkyl, aryl, arylalkyl or alkylaryl radical, which may be interrupted by heteroatoms such as O, N, S or P, wherein the hydrogens may be substituted by halogen atoms or radicals of the formula -SiR²₃, wherein
R² is the same or different and is a monovalent, unsubstituted or substituted, linear, cyclic or branched hydrocarbon radical,
R^{2b} is the same or different and is a hydrogen atom or a monovalent, unsubstituted or substituted, linear or branched, aliphatically saturated or unsaturated or aromatically unsaturated hydrocarbon radical, in which individual carbon atoms may be replaced by O, N, S or P atoms and which can form fused rings with the cyclopentadienyl radical, or one or more radicals R^{2b} can be a radical of the formula -SiR³₃, wherein
R³ is the same or different and is a monovalent, unsubstituted or substituted, aliphatically saturated hydrocarbon radical, which may be interrupted by heteroatoms, or an aliphatically unsaturated, optionally substituted hydrocarbon radical or a siloxy radical bonded via oxygen,
R⁴ is the same or different and is a hydrogen atom or a monovalent, unsubstituted or substituted, linear or branched, aliphatically saturated or unsaturated or aromatically unsaturated hydrocarbon radical, in which individual carbon atoms may be replaced by O, N, S or P atoms,
R⁵ is the same or different and is a hydrolyzable functional group selected from the group of
carboxyl -O-C(O)R⁶,
oxime -O-N=CR⁶₂,
alkoxy -OR⁶,
alkenyloxy -O-R⁸
amide -NR⁶-C(O)R⁷,
amine -NR⁶R⁷,
aminoxy -O-NR⁶R⁷,
wherein
R⁶ is the same or different and is an H atom or an alkyl, aryl, arylalkyl or alkylaryl radical,
R⁷ is the same or different and is an alkyl, aryl, arylalkyl or alkylaryl radical,
R⁸ is a linear or branched, aliphatically unsaturated organic radical,
R⁹ is the same or different and is a monovalent linear, cyclic or branched, oligomeric or polymeric organosilicon radical, which may comprise one or more groups selected from
a) aliphatically saturated or unsaturated groups having 1 to 30 carbon atoms, in which individual carbon atoms may be replaced by halogen, O, N, S or P atoms,
b) aromatic groups having 1 to 30 carbon atoms, in which individual carbon atoms may be replaced by halogen, O, N, S or P atoms,
c) hydrogen atoms bonded to Si
d) hydroxyl groups and
e) hydrolyzable groups.

10. Silicone compositions that can be crosslinked according to any of Claims 1 to 9, **characterized in that** the (methylcyclopentadienyl)trimethylplatinum complex is used as platinum catalyst (D).

11. Method for preparing the silicone compositions that can be crosslinked according to any of Claims 1 to 10, **characterized in that**
(A) organosilicon compounds comprising Si-C-bonded radicals having aliphatic carbon-carbon multiple bonds,
(B) organosilicon compounds comprising hydrogen atoms bonded to Si
or instead of (A) and (B)
(C) organosilicon compounds comprising Si-C-bonded radicals having aliphatic carbon-carbon multiple bonds and hydrogen atoms bonded to Si,
(D) platinum catalysts that can be activated by light of wavelength 200 to 500 nm, preferably UV light of wavelength 200 to 400 nm, selected from the group of cyclopentadienyl complexes of platinum and
(E) organophosphorus compounds selected from the group of the formulae (I), (II) and (III)
are mixed with one another.

12. Use of the crosslinkable compositions according to any of Claims 1 to 10 for producing moldings, casting materials, adhesives or coatings.

13. Method for crosslinking the silicone compositions according to any of Claims 1 to 10 by irradiation with light, preferably UV light, wherein the organophosphorus compounds (E) in this case lose their inhibiting effect by deactivation and the silicone compositions crosslink.

## Revendications

1. Compositions réticulables de silicone par irradiation par de la lumière, de préférence de la lumière UV, contenant
(A) des composés d'organosilicium, qui présentent des radicaux liés par Si-C dotés de liaisons multiples aliphatiques carbone-carbone,
(B) des composés d'organosilicium dotés d'atomes d'hydrogène liés à Si
ou à la place de (A) et (B)
(C) des composés d'organosilicium, qui présentent des radicaux liés par Si-C dotés de liaisons multiples aliphatiques carbone-carbone et des atomes d'hydrogène liés à Si,
(D) des catalyseurs de platine pouvant être activés par de la lumière de longueur d'onde de 200 à 500 nm, de préférence de la lumière UV de longueur d'onde de 200 à 400 nm, choisis dans le groupe des complexes de cyclopentadiényle du platine et
(E) des composés organophosphorés choisis dans le groupe de formules
P(=O)ᵤ[(OR¹⁰)]ₛ[R¹¹]ₜ (I),
P[(O)ᵢSiR¹²₃]₃ (II), 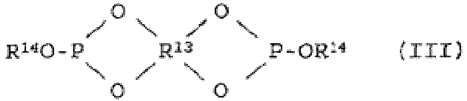
et de leurs mélanges,
R¹⁰ et R¹¹ étant identiques ou différents et signifiant à chaque fois un radical alkyle de formule CⱼH₂ⱼ₊₁ avec j = 2 à 31 ou un radical alcényle de formule CₖH₂ₖ-1 avec k = 2 à 31 ou un radicale aryle ou alkylaryle de formule - (C₆H_{5-w}) - (CᵥH₂ᵥ₊₁) _{w} avec v = 1 à 18 et w = 0 à 5,
R¹² étant identique ou différent et signifiant un radical hydrocarboné monovalent comportant 1 à 18 atome(s) de C,
R¹³ signifiant un radical hydrocarboné tétravalent comportant 5 à 30 atomes de C,
R¹⁴ étant identique ou différent et possédant la signification de R¹⁰,
s étant 0, 1, 2 ou 3,
t étant 0, 1, 2 ou 3,
étant entendu que la somme s + t = 3,
u étant 0 ou 1, préférablement 0, et
i étant 0 ou 1, préférablement 1.

2. Compositions réticulables de silicone selon la revendication 1, **caractérisées en ce que** les composés organophosphorés (E) sont utilisés en des quantités de 0,001 à 10 000 ppm en poids, de préférence 1 à 1 000 ppm en poids, à chaque fois par rapport au poids total des compositions de silicone.

3. Compositions réticulables de silicone selon la revendication 1 ou 2, **caractérisées en ce que** R
¹⁰ est un radical éthyle, propyle, phényle, nonylphényle, dinonylphényle, 2-éthylhexyle, 2,4-di-tert-butylphényle ou un radical 2-tert-butyl-4-méthylphényle,
R¹¹ est un radical phényle,
R¹² est un radical méthyle, éthyle, n-propyle, isopropyle, n-butyle, tert-butyle ou hexyle, préférablement un radical méthyle ou tert-butyle,
R¹³ est un radical de formule C(CH₂)₄- et
R¹⁴ est un radical octadécyle, 2,6-di-tert-butyl-4-méthylphényle ou 2,4-di-tert-butylphényle.

4. Compositions réticulables de silicone selon la revendication 1, 2 ou 3, **caractérisées en ce qu'**en tant que composés organophosphorés (E),
le tris(2,4-di-tert-butylphényl)phosphite, le triéthylphosphite, la triphénylphosphine, le tris(tert-butyldiméthylsilyl)phosphite ou le 3,9-bis(octadécyloxy)-2,4,8,10-tétraoxa-3,9-diphosphaspiro[5.5]undécane sont utilisés.

5. Compositions réticulables de silicone selon l'une quelconque des revendications 1 à 4, **caractérisées en ce qu'**en tant que composés d'organosilicium (A), des organopolysiloxanes linéaires ou ramifiés ou résineux composés de motifs de formule
RₐR¹_{b}SiO_{(4-a-b)/2} (IV),
sont utilisés,
R étant identique ou différent et signifiant un radical hydrocarboné monovalent lié par Si-C, éventuellement substitué, exempt de liaisons multiples aliphatiques carbone-carbone, comportant 1 à 18 atome(s) de carbone par radical et
R¹ étant identique ou différent et signifiant un radical hydrocarboné monovalent lié par Si-C doté d'une liaison multiple aliphatique terminale carbone-carbone, comportant 2 à 10 atomes de carbone par radical,
a étant 0, 1, 2 ou 3,
b étant 0, 1 ou 2
et la somme a + b étant ≤ 3,
étant entendu que les organopolysiloxanes contiennent au moins 2 radicaux R¹.

6. Compositions réticulables de silicone selon l'une quelconque des revendications 1 à 5, **caractérisées en ce qu'**en tant que composés d'organosilicium (A), des organopolysiloxanes de formule
R¹_{d}R₃-_{d}SiO(SiR₂O)ₙ(SiRR¹O)ₘSiR_{3-d}R¹d (V)
sont utilisés,
R et R¹ possédant la signification indiquée pour ceux-ci dans la revendication 5,
d signifiant 0, 1, 2 ou 3, préférablement 1,
m étant 0 ou un nombre entier de 1 à 200 et
n étant 0 ou un nombre entier de 1 à 1 800,
étant entendu que les organopolysiloxanes de formule (V) contiennent au moins deux radicaux R¹.

7. Compositions réticulables de silicone selon l'une quelconque des revendications 1 à 6, **caractérisées en ce qu'**en tant que composés d'organosilicium (B), des organopolysiloxanes linéaires, cycliques ou ramifiés composés de motifs de formule
RₑH_{f}SiO_{(4-e-f})_{/2} (VI),
sont utilisés,
R possédant la signification indiquée pour celui-ci dans la revendication 5,
e étant 0, 1, 2 ou 3,
f étant 0, 1 ou 2
et la somme e + f étant ≤ 3,
étant entendu que les organopolysiloxanes contiennent au moins 2 atomes d'hydrogène liés à Si.

8. Compositions réticulables de silicone selon l'une quelconque des revendications 1 à 7, **caractérisées en ce qu'**en tant que composés d'organosilicium (B), des organopolysiloxanes de formule
HₓR₃₋ₓSiO(SiR₂O)_{y}(SiRHO)_{z}SiR₃₋ₓHₓ (VII)
sont utilisés,
R possédant la signification indiquée pour celui-ci dans la revendication 5,
x étant 0, 1 ou 2
y étant 0 ou un nombre entier de 1 à 1 500 et
z étant 0 ou un nombre entier de 1 à 200,
étant entendu que les organopolysiloxanes de formule (VII) contiennent au moins 2 atomes d'hydrogène liés à Si.

9. Compositions réticulables de silicone selon l'une quelconque des revendications 1 à 8, **caractérisées en ce qu'**en tant que catalyseurs de platine (D), des complexes de cyclopentadiényle du platine de formule (XI) 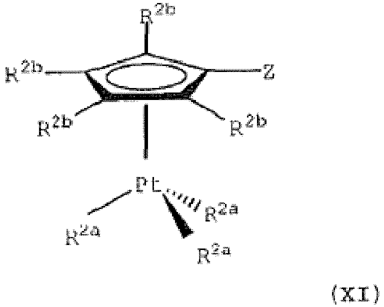 sont utilisés,
Z étant un atome d'hydrogène ou un radical hydrocarboné aliphatique linéaire ou ramifié ou étant un radical de formule
-(CR'₂)_{g}-SiR⁴ₒR⁵ₚR³_{q},
g étant un nombre entier de 1 à 8,
o étant 0, 1 ou 2,
p étant 0, 1, 2 ou 3 et
q étant 0, 1, 2 ou 3
étant entendu que la somme (o + p + q) est ≤ 3,
R' étant identique ou différent et signifiant un atome d'hydrogène ou un radical hydrocarboné monovalent, non substitué ou substitué,
R^{2a} étant identique ou différent et signifiant un radical alkyle, aryle, arylalkyle ou alkylaryle, qui peuvent être interrompus par des hétéroatomes, comme O, N, S ou P, les hydrogènes pouvant être substitués par des atomes d'halogène ou des radicaux de formule - SiR²₃,
R² étant identique ou différent et signifiant un radical hydrocarboné monovalent, non substitué ou substitué, linéaire, cyclique ou ramifié,
R^{2b} étant identique ou différent et signifiant un atome d'hydrogène ou un radical hydrocarboné monovalent, substitué ou non substitué, linéaire ou ramifié, aliphatiquement saturé ou insaturé ou aromatiquement insaturé, dans lequel des atomes de carbone individuels peuvent être remplacés par des atomes de O, de N, de S ou de P et qui peut former des cycles annelés avec le radical cyclopentadiényle, ou un ou plusieurs radicaux R^{2b} pouvant signifier un radical de formule -SiR³₃,
R³ étant identique ou différent et signifiant un radical hydrocarboné monovalent aliphatiquement saturé, non substitué ou substitué, qui peut être interrompu par des hétéroatomes, ou un radical hydrocarboné aliphatiquement insaturé, éventuellement substitué ou un radical siloxy relié par l'intermédiaire de l'oxygène,
R⁴ étant identique ou différent et signifiant un atome d'hydrogène ou un radical hydrocarboné monovalent, non substitué ou substitué, linéaire ou ramifié, aliphatiquement saturé ou insaturé ou aromatiquement insaturé, dans lequel des atomes de carbone individuels peuvent être remplacés par des atomes de O, de N, de S ou de P,
R⁵ étant identique ou différent et signifiant un groupe fonctionnel hydrolysable, choisi dans le groupe de
carboxy -O-C(O)R⁶,
oxime -O-N=CR⁶₂,
alcoxy -OR⁶,
alcényloxy -O-R⁸,
amide -NR⁶-C(O)R⁷,
amine -NR⁶R⁷,
aminoxy -O-NR⁶R⁷,
R⁶ étant identique ou différent et signifiant un atome de H ou un radical alkyle, aryle, arylalkyle ou alkylaryle,
R⁷ étant identique ou différent et signifiant un radical alkyle, aryle, arylalkyle ou alkylaryle,
R⁸ signifiant un radical organique aliphatiquement insaturé, linéaire ou ramifié,
R⁹ étant identique ou différent et signifiant un radical organosilicium monovalent linéaire, cyclique ou ramifié, oligomérique ou polymérique, qui peut contenir un ou plusieurs groupes choisis parmi
a) des groupes aliphatiquement saturés ou insaturés comportant 1 à 30 atome(s) de C, dans lesquels des atomes de carbone individuels peuvent être remplacés par des atomes d'halogénure, de O, de N, de S ou de P,
b) des groupes aromatiques comportant 1 à 30 atome (s) de C dans lesquels des atomes de carbone individuels peuvent être remplacés par des atomes d'halogénure, de O, de N, de S ou de P,
c) des atomes d'hydrogène liés à Si
d) des groupes hydroxyle et
e) des groupes hydrolysables.

10. Compositions réticulables de silicone selon l'une quelconque des revendications 1 à 9, **caractérisées en ce qu'**en tant que catalyseur de platine (D), le complexe méthylcyclopentadiényl-triméthylplatine est utilisé.

11. Procédé pour la préparation des compositions réticulables de silicone selon l'une quelconque des revendications 1 à 10, **caractérisé en ce que**
(A) des composés d'organosilicium, qui présentent des radicaux liés par Si-C dotés de liaisons multiples aliphatiques carbone-carbone,
(B) des composés d'organosilicium dotés d'atomes d'hydrogène liés à Si
ou à la place de (A) et (B)
(C) des composés d'organosilicium, qui présentent des radicaux liés par Si-C dotés de liaisons multiples aliphatiques carbone-carbone et des atomes d'hydrogène liés à Si,
(D) des catalyseurs de platine pouvant être activés par de la lumière de longueur d'onde de 200 à 500 nm, de préférence de la lumière UV de longueur d'onde de 200 à 400 nm, choisis dans le groupe des complexes de cyclopentadiényle du platine et
(E) des composés organophosphorés choisis dans le groupe des formules (I), (II) et (III)
sont mélangés ensemble.

12. Utilisation des compositions réticulables selon l'une quelconque des revendications 1 à 10 pour la préparation de corps moulés, de matériaux d'enrobage, d'adhésifs ou de revêtements.

13. Procédé pour la réticulation des compositions de silicone selon l'une quelconque des revendications 1 à 10 par irradiation avec de la lumière, de préférence de la lumière UV, les composés organophosphorés (E) perdant à cet égard leur effet inhibant par désactivation et réticulant les compositions de silicone.
